# EUROPEAN PATENT APPLICATION

(11) **EP 4 778 627 A1**
(43) Date of publication of application: **22.07.2026**
(21) Application number: 25465573.1
(22) Date of filing: 30.10.2025
(51) Int. Cl.: B01J 23/66, B01D 53/00, B01J 35/39, B01J 35/45, B01J 35/53, B01J 37/03, C25B 1/55

(54) **WIDEBAND PLASMONIC NANOCOMPOSITES FOR LIGHT ABSORPTION, FABRICATION METHOD AND APPLICATIONS**

(71) Applicant: Universitatea Nationala de Stiinta si Tehnologie Politehnica Bucuresti, Bucharest (RO)
(72) Inventor: COBIANU, Cornel, Bucuresti (RO); GRADISTEANU, Gratiela, Bucuresti (RO); ANDREI, Laura-Elena, Bucuresti (RO); ILIESCU, Florina Silvia, Tunari (RO); TIHAUAN, Bianca-Maria, Bucuresti (RO); IOVU, Horia, Bucuresti (RO); ILIESCU, Ciprian, Tunari (RO)
(74) Representative: Enescu, Miruna

(57) **Abstract**

This invention discloses of a radically new nanomaterial and fabrication method for the excellent removal of pathogenic microbes (viruses, bacteria, fungi) from the nonbiological external surfaces (like glass or traditional wall materials of nonmedical and medical living spaces such as private residence, schools, crowded enclosed rooms or medical settings such as operating rooms, and medical instruments, equipment and other nonbiological surfaces that need proper antimicrobial protection), and for the enhanced photocatalytic removal of organic pollutant from water and/or enhanced water split reactions for hydrogen generation. This high efficiency is demonstrated by (i) exploiting the local plasmonic heating (photothermal) effect and the enhanced photocatalytic effect of the plasmonic noble metal (core) (Au, Ag)-semiconducting metal oxides (ZnO, TiO₂, SnO₂, CeO₂ or any other metal oxide) (shell) binary nanocomposites, which are exposed to the light spectrum, from ultraviolet up to visible and near infrared range, and, (ii) by eliminating the well-known limitations of narrowband light absorption features specific to the plasmonic nanohybrids. As a results of these effects, harvesting as much as possible of the entire solar light spectrum and enhanced generation of reactive oxygen species (ROS) is obtained. In addition, for antimicrobial applications, direct reaction of cations released by the metal oxides with the pathogenic cells in the presence or absence of light may contribute to these benefic effects. These enhanced synergetic effects will kill the pathogenic microbes due to either temperature increase above their supportability level, and/or due to the generation of reactive oxygen species (ROS) which will react with the microbe cell membrane and the inner cell components, for destroying it. The exemplary embodiments related to the original synthesis and use of the novel plasmonic core-shell wideband nanocomposites which are here obtained by mixing of the Au@ZnO, Au@TiO₂, Au@SnO₂, Au@CeO₂, Ag@ZnO, Ag@TiO₂, Ag@SnO₂ and Ag@CeO₂ core-shell plasmonic groups of certain shapes and sizes will change the plasmonic paradigm from "tuning the narrowband absorption of the plasmonic nanocomposite to a certain incident light spectrum " to "a wideband personalized absorption of the incident light of the plasmonic nanocomposite harvesting the light spectrum from ultraviolet to visible and near infrared", which is also present in the harvested sunlight.

## Description

### Technical field

This invention consists in the disclosure of a radically new nanomaterial and fabrication method for the excellent removal of pathogenic microbes (viruses, bacteria, fungi) from the nonbiological external surfaces (like glass or traditional wall materials of nonmedical and medical living spaces such as private residences, schools, crowded enclosed rooms or medical settings such as operating rooms, and medical instruments, equipment and other nonbiological surfaces that need proper antimicrobial protection), and for the enhanced photocatalytic removal of organic pollutant from water and enhanced water split reactions for hydrogen generation. This high efficiency is demonstrated by (i) exploiting the local plasmonic heating (photothermal) effect and the enhanced photocatalytic effect of the plasmonic noble metal (core) (Au, Ag)-semiconducting metal oxides (ZnO, TiO₂, SnO₂, CeO₂) (shell) binary nanocomposites, which are exposed to the light spectrum, from ultraviolet up to visible and near infrared range, and, (ii) by eliminating the well-known limitations of narrowband light absorption features specific to the plasmonic nanohybrids. As a results of these effects, harvesting as much as possible of the entire solar light spectrum and enhanced generation of reactive oxygen species (ROS) is obtained. In addition, for antimicrobial applications, direct reaction of cations released by the metal oxides with the pathogenic cells in the presence or absence of light may contribute to these benefic effects. These enhanced synergetic effects will kill the pathogenic microbes due to either temperature increase above their supportability level, and/or due to the generation of reactive oxygen species (ROS) which will react with the cell membrane (microbe or virally infected cell) and the inner cell components, for destroying it. The exemplary embodiments related to the original synthesis and use of the novel plasmonic core-shell nanocomposites which are here obtained by mixing of the Au@ZnO, Au@TiO₂, Au@SnO₂, Au@CeO₂, Ag@ZnO, Ag@TiO₂, Ag@SnO₂ and Ag@CeO₂ core-shell plasmonic groups of certain shapes and sizes will change the plasmonic paradigm from "tuning the narrowband absorption of the plasmonic nanocomposite to a certain incident light spectrum " to "a wideband absorption of the incident light of the plasmonic nanocomposite harvesting the light spectrum from ultraviolet to visible and near infrared", which is also present in the harvested sunlight.

### BACKGROUND OF THE INVENTION

Today, the continuous improvement of the nanomaterial technology is highly recognized as an emerging solution to the most important world-wide challenges in the field of alternative clean energy sources, process industry and nanomedicine, including new antimicrobial drugs based on inorganic nanocomposites. The present invention will address such challenges via disclosing novel nanomaterials with multiple applications. To better understand the present invention, the key milestones of the research in this field is described as follows. At this stage, there is an intensive research work for developing novel nanocomposites able to increase the efficiency of the solar light and water energy harvesting, and of the nanomaterial-based catalytic processes for improving the water quality, and finally the health of the people. As it will be shown below, the evolution of nanomedicine research aiming the antimicrobial application of nanocomposites consisting of noble metal and semiconducting metal oxides went in parallel with the research for enhancing the efficiency of the removal of organic pollutant from water and water splitting reactions, and these approaches are synergetic interlinked. Pathogenic microbes like viruses, bacteria and fungi can trigger several infectious diseases, and therefore represent a big threat. The appearance of pathogen bacteria, like Methicilline-Resistant Staphylococcus Aureus (MRSA), which are resistant to the antibiotics action, due to abuse and misuse, further complicates the bactericidal fighting, and requires alternative approaches. The recent global pandemic of COVID 19 has brought into attention of the scientific community the need for further research on this direction and for more precautions to be taken to reduce the risks of pathogenic surface contamination, as a source of microbe spreading. In the case of medical settings (e.g., hospitals and surgical operating rooms) or biomedical instrumentations (e.g., scissors, surgery utensils) the penetration of such microbial agents inside the body of the patient during the medical act can minimize his survival even if the surgery has been professionally done. Public spaces like nurseries, schools, nursing homes, crowded closed rooms or private living spaces for immunocompromised persons after their hospital discharge need proper antimicrobial protection for the residents' better quality of life. Traditional physical and chemical sterilization methods, like UV illumination of the external surfaces from critical spaces, or chemical sterilization of instrumentation and spaces by means ozone, chloride, formaldehyde, alcohol may require either special precautions for personnel doing it, or may be energy intensive and expensive due to neutralization methods necessary to be used to avoid environmental pollution (Xingda An, Shyamsunder Erramilli and Bjorn Reinhard, "Plasmonic nanoantimicrobials: properties, mechanisms and applications in microbe inactivation and sensing", published in Nanoscale, 2021, 13, 3374).

The origin of the alternative-to-antibiotic (nano)technologies to be described here for the pathogenic microbe sterilization comes from ancient times, when ancient Persia, Roman Empire and Egypt were using antimicrobial utensils made from silver and copper. Today, the list of antimicrobial metals is much longer and includes: Ag, Al, Co, Cr, Cu, Fe, Ga, Mo, Mn, Ni, Sb and Zn. (Sergey Gudkov et al., "A Mini Review of Antibacterial Properties of ZnO Nanoparticles", published in Frontiers in Physics, 9:641481.doi:10.3389/fphy.2021.641481). While the intimate antimicrobial mechanisms of the above metals are still under debate (either cell membrane penetration and damage made by the metal nanoparticle, and/or cation release from the metal, and/or DNA damage via reactive oxygen species (ROS), and/or enzyme inhibition), it has been generally agreed that the antibacterial efficiency of those metals was enhanced by the use of their nanometer size particles. (Nelson Duran et al., "Silver nanoparticles: A new view on mechanistic aspects on antimicrobial activity", Nanomedicine: Nanotechnology, Biology, and Medicine 12 (2016) 789-799). More recently, gold (Au) nanoparticles were also included on this list, taking into consideration the relatively new findings related Au efficacy against antimicrobial resistant (AMR) pathogen bacteria, especially in the case of the abuse and misuse of those antibiotics. (Marwan M. Sa'ed, Raphael D. Ayivi, Jianjun Wei, Sherine O. Obare, "Gold nanoparticles antibacterial activity: Does the surface matter?", published in Colloid and Interface Science Communications, 62, (2024), 100804.). It was shown that antimicrobial activity of the gold is related to its interaction with DNA by upregulating genes within the cell. (K. Zheng, M. I. Setyawati, D. T. Leong, J. Xie, "Antimicrobial Gold Nanoclusters", ACS Nano 2017, 11, 6904).

The native oxidation of most metals (see native oxidation studies on, Ti, Zn, Sn, Ce and other metals) when exposed to ambient air has triggered the research of antimicrobial activity of the associated semiconducting metal oxides (SMO), like ZnO, TiO₂, SnO₂, CeO₂, and of the other metals from the above list. Thus, luckily, down the road, it has been demonstrated that SMO nanoparticles (NP) have also an important bactericidal effect on Gram-positive and Gram-positive bacteria, where the intimate antibacterial mechanisms are more or less similar to those described to the metals from which they derive. (Usha Kadiyala, Nicholas A. Kotov and J. Scott Van Epps, "Antibacterial Metal Oxide Nanoparticles: Challenges in Interpreting the Literature", published in Curr. Pharm. Des. 2018; 24(8): 896-903. doi:10.2174/1381612824666180219130659). It is well known that the semiconducting metal oxides have an antimicrobial activity even under dark conditions, due to the biochemical reactions at the interface between these oxides and the cell membrane. (Rexona Khanom, Sahana Parveen, Mahfujul Hasan, Antimicrobial Activity of SnO2 Nanoparticles against Escherichia Coli and Staphylococcus Aureus and Conventional Antibiotics, American Scientific Research Journal for Engineering, Technology, and Sciences (ASRJETS) (2018) Volume 46, No. 1, pp 111-121). The list of antimicrobial semiconducting metal oxides is much longer than that cited above, and recently, it was expanded with many semiconducting transition-metal oxides, like VO₂, Mn₂O₃, Co₃O₄, NiO, Fe₂O₃, MoO₃, and its binary and ternary composites, just to give more examples.

An important step forward on further enhancing the antimicrobial activity of semiconducting metal oxides (SMO) nanoparticles (NP) was demonstrated by exposing these semiconducting metal oxides NP to UV-light, in which case, the *absorbed* incident photons of energies higher than bandgap energy of SMO will generate pairs of free electrons in the conduction band (CB), and (free) holes in the valence band (VB) of the metal oxide (the so-called UV-based excitonic excitation). In the presence of oxygen and water, this UV-generated free electrons will react with the oxygen molecules for the formation of the superoxides (O₂⁻), while the UV-generated (free) holes will react with the water molecules for the formation of the neutral hydroxyl radicals (^{·}HO) and protons (H⁺). (Howard A. Foster, Iram B. Ditta, Sajnu Varghese and Alex Steele, "Photocatalytic disinfection using titanium dioxide: spectrum and mechanism of antimicrobial activity", published in Appl. Microbiol. Biotechnol. (2011) 90:1847-1868, DOI 10.1007/s00253-011-3213-7). Both superoxide and hydroxyl radicals are very reactive species being thus called reactive oxygen species (ROS). For example, the superoxide can rapidly react with a proton for the formation of another ROS species called hydroperoxyl radical, also known as the hydrogen superoxide (HOO^{•}), as described in the above cited paper. These ROS species generated by semiconducting metal oxides NP exposed to UV light explain the *photocatalytic* properties of SMO's, which can be used for removing the polluting agents from water (by their mineralization into CO₂ and H₂O), for water split reactions during water electrolysis, and for the photocatalytic killing of the microbial agents. Thus, the *photocatalysis* is an additional bactericidal mechanism, which is added to the direct reaction of SMO NP with the microbes occurring under dark conditions. More detailed, the above reactive oxygen species (ROS) will chemically attack the bacterial cell walls or may enter the cytoplasm, penetrate nucleus for damaging the DNA, and thus they will further increase the antimicrobial activity of those metal oxides NP's, with respect to dark conditions. These photocatalytic properties of the metal oxides have been discovered long ago. Thus, in the year 1921, the interactions of TiO₂ and light were discovered and this way the TiO₂ became the first photocatalyst described in the literature (Carl Renz, "Light reactions of the oxide of titanium, cerium and earth acids", Helvetica Chimica Acta, 1921, pp. 961-968 - WILEY-VCH Verlag GmbH). Later in 1972, the photocatalytic properties of TiO₂ enhancing the water splitting reactions were demonstrated by Fujishima and Honda (Fujishima A., Honda K. (1972) Electrochemical photolysis of water at a semiconductor electrode, published in Nature 238(5358):37-38.). Later, in the year 1977, the photocatalytic properties of TiO₂ for the oxidation of pollutants from aqueous solutions were described for the first time, (Carey JH, Lawrence J, Tosine HM (1976) "Photodechlorination of PCB's in the presence of titanium dioxide in aqueous suspensions", published in Bull. Environ. Contam. Toxicol. 16(6):697-701), while in the year 1985 the antimicrobial activity of TiO₂ was disclosed (Matusunga T. (1985), "Sterilization with particulate photosemiconductor", published in J. Antibact. Antifung. Agents, 13:211-220).

For further increasing the antimicrobial efficiency of semiconducting metal oxides NP, like ZnO, TiO₂, SnO₂, CeO₂ and others, which behave as large bandgap semiconductors, many methods have been tried, e.g., combination of different SMO's, combination of SMO's and carbon nanoparticles, coating of the SMO NP with modifying organic agents, like gelatin, polyethylene glycol, polystyrene, or other organic molecules. ((Sergey Gudkov et al., "A Mini Review of Antibacterial Properties of ZnO Nanoparticles", published in Frontiers in Physics, 9:641481.doi:10.3389/fphy.2021.641481).

Despite the above major progresses described above on increase of the antimicrobial activity of the semiconducting metal oxides (SMO) NP, via the direct destructive interaction between SMO's and microbes, and the photocatalytic reactions between the UV-generated ROS's and the biocomponents of the cells, there were still important limitations of the use of the above SMO's NP or their combinations for the photocatalytic killing of the microbes, or for the water depolluting or water splitting. These limitations were coming from (i) the fast recombination rate of the free electrons and holes generated by UV irradiation, which will therefore limit the amount of ROS production, and (ii) from the fact that the UV light (below the wavelength of 380 nm) represents only 5% of the solar light wavelength spectrum, which, obviously, excludes most of the solar light spectrum from participating to the photocatalysis process. (Saji Thomas Kochuveedu, Yoon Hee Jang and Dong Ha Kim, "A study on the mechanism for the interaction of light with noble metal-metal oxide semiconductor nanostructures for various photophysical applications", published in Chem. Soc. Rev., 2013, DOI: 10.1039/c3cs60043b). These disadvantages of the SMO's NP have been the driving force for further research on more efficient antimicrobial nanomaterials, or organic pollutant removal from water, or water split reactions for hydrogen production, as required for future hydrogen economy.

One of the most attractive nanomaterial approaches for solving the above two disadvantages and enhancing the benefic effects appears to be the use of the nanohybrids obtained by mixing the plasmonic noble metal nanoparticles (Au, Ag) (the plasmon concept will be explained later) and the semiconducting metal oxides NP's, as described in the above cited paper. Actually, the plasmonic noble metal-SMO nanocomposite will extend the sunlight absorption capability from UV absorption spectrum (UV radiation below 380 nm solar light spectrum is only about 5% of the solar radiation) of the SMO to the visible light absorption spectrum of the plasmonic noble metals (Ag nanoparticles absorption band is at around 400 nm, and Au nanoparticle plasmonic absorption band is at around 530 nm), with the advantage that about 40% of solar radiation is present in the visible range. On the other hand, at thermodynamical equilibrium, at the interface between the plasmonic noble metal and the semiconducting metal oxide, an energy band bending (either ohmic, or, Schottky type) occurs and thus an associated internal electric field will be created, which will facilitate the separation of the electron-hole pairs generated by UV and visible light absorption, and, which will therefore be more efficiently contributing to the photocatalytic effect described above, and thus minimizing the excitonic recombination of the free charged carriers. (Tanujjal Bora and Joydeep Dutta, "Plasmonic Photocatalyst Design: Metal-Semiconductor Junction Affecting the Photocatalytic Efficiency", published in Journal of Nanoscience and Nanotechnology, Vol. 19, 383-388, 2019). Thus, today, due to multiple applications of plasmonic nanomaterials, understanding and controlling the functional properties of the plasmonic noble metal-SMO nanocomposite is a priority. For the sake of clarity, we shall firstly summarize below the features of the plasmonic noble metal nanoparticles resonantly exposed to incident light, as follows.

From solid-state physics, it is well known that the metal nanoparticles (NP) contain a high density of free electrons, which can move freely inside NP towards the positive bias of an applied electric field, while the uncovered metal ions will remain positively charged. Thus, a dynamic dipole behavior of the metal NP will be obtained in a variable electric field, between that moving electron cloud (towards the positive bias of electric field) and the fix ions remaining on the opposite side of NP. Such an electric behavior of metal NP charge is analog to plasma behavior in a varying electric field. The same electric dipole behavior and plasma like behavior will appear when the metal NP is exposed to the varying electric field component of the light, when the free electrons will collectively oscillate with a frequency related to the frequency of the electric field.

Briefly, in the case of the interaction between the plasmonic metal NP's (like Au and Ag) with a diameter, "d", and the incident light with the wavelength, "λ'' much higher than "d", an amplified surface light wave will be generated, when the frequency of the collective oscillation of the electron cloud will be equal with frequency of the oscillation of the electric field of the incident light. Under this resonant condition, the collective oscillation of the metal electrons relative to the metal ions (like in a plasma) will define the light-matter *resonant interaction process,* which is also characterized by the amplified surface light wave propagation at the metal-dielectric interface on a limited distance. By analogy with the definition of the *phonon,* which is a quantum quasiparticle associated to the collective oscillations/vibrations of the atoms in a solid material, a quasiparticle called *surface plasmon* (SP) is associated to the resonant collective oscillations of the (free) surface electrons in the metal nanoparticle exposed to the electromagnetic field of the light, at the *resonance* described above. Therefore, the Surface Plasmon Resonance (SPR) is obtained for a certain wavelength of the incident light, at the interface between the nanoparticle and the surrounding dielectric medium, and from this reason, these quasiparticles associated to the surface light waves are called Localized Surface Plasmons (LSP) and the resonances are called Localized Surface Plasmon Resonances (LSPR).

The LSPR spectra of spheric nanoparticles were theoretically calculated by Mie in 1908 (G. Mie, Ann. Phys., 1908, 25, 377) by means of the Maxwell's equations, and the experimental SPR results validated the above theory (Stephan Link and Mostafa A. El-Sayed, "Size and Temperature Dependence of the Plasmon Absorption of Colloidal Gold Nanoparticles", published in J. Phys. Chem. B 1999, 103, 4212-4217). The subsequent theoretical approaches have been done for all shapes of the metal nanoparticles, showing that the spectral resonances are red-shifted as a function of size and morphology of the plasmonic metal nanoparticle (Min Hu et al., "Engineering their Plasmonic Properties for biomedical Applications", Chem. Soc. Rev., 2006, 35, 1084-1094). Theoretically, it was shown that at the plasmonic resonance, the dielectric permittivity of the metal should be negative in sign, and it should be twice higher than the permittivity of the surrounding dielectric medium. (Frohlick condition). The other key theoretical findings were the existence of a nanoparticle size-dependent resonance absorption (RA) and of a resonance scattering (RS) of the light incident on the plasmonic metal nanoparticles, where the RA was more important than RS for smaller size metal nanoparticles (below 90 nm for gold), while RS was more important than RA for bigger size nanoparticles (above 90 nm for gold). (Guillaume Baffou and Romain Quidant, "Thermo-plasmonics: using metallic nanostructures as nano-sources of heat", Laser Photonics Rev., 1-17 (2012) / DOI 10.1002/lpor.201200003).

The propagation of the intense, resonant light surface wave is performed on a limited distance (i.e. the light wave is decaying) due to the inherent radiative and non-radiative losses which appear at the interface between the plasmonic metal NP's and the surrounding dielectric. The decay of the resonant surface light wave depends on the type, size, and the surface roughness of the metal nanoparticle. It was demonstrated that the radiative decay of the LSPR is dominant in the case of metal plasmonic nanoparticles with larger particle size due to the enhanced light scattering, while the (non-radiative) dissipative decay of LSPR is dominant in the case of metal plasmonic nanoparticles with smaller particle size, due to enhanced light absorption. Such an enhanced absorption will generate hot free electrons in the metal, which are thermalizing rapidly between them, in about 100 fs. These thermalized hot electrons will suffer electron-phonon interactions, thermalizing the entire metal nanoparticle, and finally, the heat of the metal nanoparticle will be transferred to the surrounding of the plasmonic nanoparticle, which will be also heated, a process which is defined as the *photothermal effect* in the metal plasmonic nanoparticles at resonance, as explained by Baffou and Quidant, in the above paper.

The above briefly-described mechanism of heating of plasmonic noble metal nanoparticles and its surroundings via a resonant light absorption has triggered a new research field called *thermoplasmonics,* which is aiming (i) the development of the experimental measurement methods of temperature profile inside and around of an irradiated array of plasmonic nanoparticles, (ii) the modeling and simulation of the steady state and dynamic temperature profiles on inner and outer regions of the light-exposed plasmonic metal nanoparticles, and (iii) the advances in the bio-medical applications of the newly born field. On this direction, one of the new experimental methods for the nano scale temperature profile measurement around a plasmonic metal particle consists in the illumination with directly polarized light of the plasmonic nanoparticles surrounded by a dielectric medium containing dipolar fluorescent molecules (which present fluorescence polarization anisotropy (FPA), followed by measuring the further increase of the FPA due to further Brownian motion of the molecular dipoles, determined by the temperature increase (G. Baffou, M.P. Kreuzer, F. Kulzer, and R. Quidant, "Temperature mapping near plasmonic nanostructures using fluorescence polarization anisotropy", published in Optics Express, Vol. 17, Issue 5, pp. 3291-3298, (2009), https://doi.org/10.1364/OE.17.003291). Very useful results were obtained by the opto-thermal simulation of the temperature profile around a gold plasmonic nanoparticle immersed in water, as a function of incident light flux and nanoparticle size (Alexander O. Govorov, Wei Zhang, Timur Skeini, Hugh Richardson, Jaebeom Lee, Nicholas, and A. Kotov., Gold nanoparticle ensembles as heaters and actuators: melting and collective plasmon resonances, Nanoscale Res Lett (2006) 1:84-90). Thus, these authors have shown that a temperature increase of about 5°K is obtained at the surface of a single Au nanoparticle with the radius of 30 nm immersed in water, after illumination with 520 nm visible light of intensity equal to 10000 W/cm², for about 1000 ns. (It is good to know that the solar irradiance at the sea level is equal to 1000 W/m²). On the other hand, for an Au nanoparticle with the radius of 100 nm, a temperature increase of 40K at its surface is obtained for the illumination at its specific size-dependent resonant wavelength. As it can be easily understood, the temperature increase in the center of an Au nanoparticle array is much higher due to contribution of each nanoparticle to the heating process. Thus, for an array of 4x4 Au nanoparticles (each with radius of 30 nm) exposed to a resonant incident light of 530 nm, of intensity equal to 10000 W/cm², (a laser of power of 10 mW with the beam area of 1 µm²) the temperature increase in the center of the array was equal to 25 K. (It is good to know that the light intensity of 10000W/cm² is provided by a laser source of power equal to 25 mW and a laser spot diameter of 4 µm). Under these considerations, it is easily understood that for a certain intensity of the incident light, local temperature at the interface between the gold NP and surrounding medium, higher than the microbe supportability temperature can be obtained, and thus the photothermal effect will contribute to the antimicrobial effect and the temperature activated photocatalytic reactions for water depolluting and water split reactions in hydrogen production, under specific artificial illumination conditions.

The experimental spectral responses of the water-immersed Au plasmonic nanoparticles as function of the NP diameter, in the range of 9-99 nm have proved that the wavelengths of the resonant absorption peaks have continuously increased from the value of 517 nm (for Au NP diameter=9 nm) to the value of 575 nm (for Au NP diameter of 99 nm), while the associated absorption bandwidths (defined as the full width at the half maximum (FWHM)) of those resonant absorptions firstly decreased for NP with diameter increase up to 25 nm, and then started to increase for Au NP with higher diameters. (Stephan Link and Mostafa A. El-Sayed, "Size and Temperature Dependence of the Plasmon Absorption of Colloidal Gold Nanoparticles", published in J. Phys. Chem. B 1999, 103, 4212-4217). This is a clear demonstration of the possibility to vary the resonant absorption band of the plasmonic Au NPs in the visible spectrum by controlling the diameter of the Au NP, where direct synthesis of Au NP is performed up to a NP size of about 25 nm, and seed methods are used for growing bigger sizes of Au NP. This cited work presents also a well-established method for the synthesis of the gold nanoparticles in this diameter size range, based on the well-known Turkevich methodology (John Turkevich, Peter Cooper Stevenson Ad James Hillier, "A Study of The Nucleation and Growth Processes in the Synthesis of Colloidal Gold", published in J. Discuss. Faraday Soc. 1951, 11, 55). In addition, by controlling the Au NP synthesis process, so that Au nanorods, Au nano-shells or Au nanocages with different geometrical sizes and aspect ratios to be obtained, the tuning of the experimental SPR spectra was further extended from visible to near-infrared (NIR) spectrum i.e., from about 520 nm to 1200 nm. (R.D. Averitt, D. Sarkar, and N.J. Halas, "Plasmon Resonance Shifts of Au-Coated Au2S Nanoshells: Insight into Multicomponent Nanoparticle Growth", Physical Review Letters, Volume 78, Number 22); Min Hu et al., "Engineering their Plasmonic Properties for biomedical Applications", Chem. Soc. Rev., 2006, 35, 1084-1094). Thus, by tuning the SPR spectra in the NIR range, applications of photothermal effect of Au NP to the killing of cancer tumors via local heating was further supported. Min Hu et al., "Engineering their Plasmonic Properties for biomedical Applications", Chem. Soc. Rev., 2006, 35, 1084-1094). All these research results from above concerning the control of the size and shape of the gold nanoparticles have been further refined by the commercial companies, like Sigma Aldrich owned by Merck, which are supplying colloidal solutions of monodisperse gold nanoparticles, like nanospheres, nanorods, for plasmonic absorption of light in a large spectrum from visible to near infrared.

In a similar way to the interest for the study of the plasmonic gold nanoparticles, there was an important research activity on the control of the size and shape of plasmonic silver nanoparticles (Shekhar Agnihotri, Soumyo Mukherji and Suparna Mukherji, "Size-controlled silver nanoparticles synthesized over the range 5-100 nm using the same protocol and their antibacterial efficacy", RSC Adv., 2014, 4, 3974) for antimicrobial applications as well as photocatalytic applications (Kuldeep Negi, Ahmad Umar, M.S. Chauhan, M. Shaheer Akhtar, Ag/CeO2 nanostructured materials for enhanced photocatalytic and antibacterial applications, "Ceramics International 45 (2019) 20509-20517"). As shown in the above cited papers, these days, there is a good understanding of the chemical process for the size and shape of the plasmonic Ag nanoparticles in the range from 5 nm up to 100 nm. Thus, for obtaining monodisperse Ag nanoparticles below 10 nm, an increased molar ratio (0.5) between the molar concentration of a strong reducing agent of sodium borohydride (NaBH₄) and the molar concentration of the weaker reducing agent of trisodium citrate (TSC) is required, while for preparing Ag nanoparticles of 100 nm, the same molar ratio is equal to 3 x 10⁻⁴. This small molar ratio will also provide a wider size distribution. From balancing the proportion of the two reducing agents, the entire range of Ag nanoparticles from 5nn to 100 nm was obtained. A particular aspect of the Ag nanoparticles is the evolution of its UV-Vis spectra as function of the Ag nanoparticle size. Thus, the above authors prove that the narrowband plasmonic light absorptions occur in Ag nanoparticles in the visible wavelength range from 400 to 500 nm, which are red shifted when the size of Ag nanoparticles increases from 5 nm to 100 nm. Thus, it is obvious that the plasmonic effects of the Ag nanoparticles are not extended along the entire visible light spectrum. Related to these plasmonic Ag nanoparticles, it has been also demonstrated that similar to the Au nanoparticles, the Ag nanoparticles exposed to visible light showed the photothermal effect which was accurately measured by bolometer method. The approach has revealed that a single Ag nanoparticle can dissipate a power in the range of 101.3 fW and ≈205.3 fW. (Hanliang Zhu, Evelína Gablech, Imrich Gablech and Pavel Neuzil, "The collective photothermal effect of silver nanoparticles probed by a microbolometer", Commun Mater 5, 66 (2024)). Again, based on these research results and further improving the fabrication technology of plasmonic silver nanoparticles, the commercial company Sigma Aldrich owned by Merck is selling colloidal solutions of monodisperse silver nanospheres.

Thanks to the enhanced photocatalytic properties of plasmonic noble metal-semiconducting metal oxide (SMO) nanocomposites described briefly above, there is an extensive literature related to (i) the applications of these nanohybrids for the water split reactions aiming hydrogen production required by future hydrogen economy, and (ii) the removal of the organic pollutants from water, knowing the importance of clean water sources for our communities. For example, recently, the ZnO:Au nanohybrids were used for their reusable photocatalytic effect on the degradation of the toxic organic waste substances which are present in water. (R. Raji, K.G. Gopchandran, "Plasmonic Photocatalytic activity of ZnO:Au nanostructures: tailoring the plasmon absorption and interfacial charge transfer mechanism", Journal of Hazardous Materials, vol._368, (2019), pp. 345-357). As described in this above cited paper, the ZnO:Au nanocomposite is prepared by the co-precipitation method, starting from HAuCl₄ and ZnNO₃ precursors in the presence KOH reducing agent, followed by nanocomposite drying at 100°C, and the calcination treatment at 300°C. As a part of the synthesized nanohybrid, the ZnO is a semiconducting metal oxide (SMO) photocatalyst characterized by low cost, non-toxicity, high photo-chemical-mechanical stability, excitonic excitation in the UV light at about 380 nm due to its large bandgap energy (3.09-3.29 eV) feature which makes the ZnO nanomaterial very compatible with the bio-medical applications, too. On the other hand, by incorporating Au NP's in the ZnO matrix, a photocatalytic ZnO:Au nanohybrid was obtained, which brought an additional broad plasmonic absorption band of the SPR spectra in the range of 450-600 nm. The optimized Au concentration in the matrix consisted in 4 mol% Au in the matrix, and for this composition the photocatalytic efficiency in the mineralization of sulforhodamine B was highest in the presence of sunlight.

An increase of the photocatalytic efficiency of the Au-ZnO nanocomposite for the organic pollutant removal from water was demonstrated by *completely* embedding the Au NP into the ZnO matrix, thus obtaining what it is called Au (core)-ZnO (shell) nanohybrid, briefly described as Au@ZnO core-shell nanocomposite. (Yiqiang Sun et al., "Complete Au@ZnO Core-Shell Nanoparticles with Enhanced Plasmonic Absorption Enabling Significantly Improved Photocatalysis", published in Nanoscale, 2016, 8, 10774-10782). This approach provides a maximum protection of the plasmonic metal from the outside environment, and also a maximum interface region between the Au and ZnO, which will provide a *complete* Schottky barrier around the entire Au outer surface preventing the recombination of the free carriers photogenerated in both ZnO (in the UV range, below 380 nm) and in the plasmonic Au NP (in the visible range, at about 600 nm). The red-shift of the plasmonic resonance of the Au NP from 520 nm to 600 nm, within the hybrid was possible due to the increased refractive index of ZnO (1.78) with respect to water (1.4). It was thus demonstrated that the optical absorption spectra of the Au@ZnO core-shell nanohybrids exposed to the sunlight have shown a maximum resonant absorbance with respect to either Au or ZnO NP, or even a mixture of isolated Au NP's and ZnO NP's. Therefore, the intimate Au-ZnO contact and the Schottky barrier obtained by embedding the Au NP into the ZnO shell can explain the advantage of this core-shell type of nanocomposite. The core-shell Au@ZnO nanohybrid synthesis was based on the use of a two-step method, where in the first step the octahedral Au NP's were prepared from HAuCl₄ (as a gold source) and polydiallyldimethylammonium (PDDA) surfactant in an ethylene glycol solution (polyol process) (Cuncheng Li et al., "A Facile Polyol Route to Uniform Gold Octahedra with tailorable Size and Their Optical Properties", ACSNANO, published on line, 13 August 2008, vol. 2., No. 9). The major advantage of this polyol process from above is the fact that it can control the size and shape of the *monodisperse* Au nanoparticles from 15 nm to 125 nm by introducing acid or basic solutions in the reaction medium, without the need of a seed. Briefly, smaller Au NP sizes (below 50 nm) are obtained by increasing NaOH concentration, while bigger Au NP sizes (from 50 nm to 230 nm) are obtained when the concentration of acidic solution (HCl) is increased. In the second step, to the colloidal solution of Au (initially of the red color), an aqueous solution of Zn(NO₃)₂ containing a mixture of reducing agent of NaOH and NaBH₄ is added, and this final mixture was reacted for about 20 minutes at room temperature. At the end of the synthesis, a blue (reflected) color of the Au@ZnO suspension was obtained, demonstrating that a portion of the visible colors (mainly red) was absorbed! A specific feature of this core-shell type of Au@ZnO synthesis is the *narrow* resonant absorption around red color wavelength, with respect to the very broad absorption band in the case of the ZnO:Au nanohybrids obtained by co-precipitation method, as described earlier. The explanation would be that in the case of core-shell synthesis a monodispersed, controlled size of Au NP is obtained (i.e., about 100 nm ± 10 nm), while in the specific case of that co-precipitation method a large dispersion of the Au NP's was obtained.

On the same direction of identifying new plasmonic metal-semiconducting metal oxides nanocomposites, one can consider Au@SnO₂ core-shell nanohybrids, where the *SnO₂* NP bandgap energy is in the range of 3.6-3.8 eV. This Au@SnO₂ nanohybrid has revealed enhanced *multimodal* photocatalytic properties in the presence of sunlight. (Xiaoqi Fu, Guangfang Grace Li, Esteban Villarreal and Hui Wang, "Hot Carriers in Action: Multimodal Photocatalysis on Au@SnO2, Core-Shell Nanoparticles", Nanoscale, 2019, April 11; 11(15), pp.7324-7334, doi: 10.1039/c9nr02130b). For the case of the Au@SnO₂ core-shell nanohybrids (with the Au core of 96 nm and the *SnO₂* shell of 17 nm), the authors demonstrated at the *experimental level* the following modes/mechanisms of light absorption and photogeneration of free carriers (hot electrons, hot holes, excitonic electron-holes pair) as a function of the wavelength of the incident sunlight applied, as follows: (I) For UV light component of the sunlight excitation, at wavelengths below 300 nm, excitonic electron-hole pairs are generated (by electron transition from valence band to conduction band of SnO₂), with reduced electron-hole recombination due to the formation of the Schottky barrier between Au core and SnO₂ shell). These excitonic hot carriers will contribute to the ROS generation and water pollutant mineralization, (ii) For visible light with wavelength of about (445-500) nm, i.e., the photon energy of about 2.3 eV, the "d to sp" interband electronic transitions in the Au NP (core) will take place, which create free electrons with rather low energy in the sp-band near, but above Fermi level and (high energy) *hot* holes in the d band of Au NP core. In this case, it is the mission of the hot holes to react with water molecules for generating the hydroxyl radicals (HO^{·}) to further catalyze the mineralization reaction for the organic pollutant removal from water. Therefore, the hot holes were able to perform even an anaerobic (no oxygen present) catalysis due to the hydroxyl radicals reacting with water molecules, while the hot electrons, of rather lower energy needed the presence of atmospheric oxygen for generating superoxide ROS. On the other hand, because there is practically no spectral overlap between the wavelength of interband transitions (d to sp-band), of about 2.3 eV, specific to Au NP (i.e. 340-500 nm) and the spectral band of the plasmonic resonances (500-1000 nm) within the Au@SnO₂ core-shell, other plasmonic energy transitions between the Au NP core and the SnO₂ shell, like enhanced local electromagnetic field (antenna effect), and Landau damping (wave propagation effect) cannot occur. Therefore, these last two spectral overlap-based plasmonic energy transfers do not exist in Au@SnO₂ core-shell. Overall, the above cited paper has proven that the Au@SnO₂ core-shell nanohybrids were able to harvest sunlight energy covering the whole spectral range from UV to NIR spectrum and to utilize it for the excitonic and plasmonic generation of photocarriers to be further used for the ROS generation under aerobic and anaerobic conditions, which will finally determine an efficient photocatalytic process.

As mentioned above, historically, the TiO₂ nanomaterial was the first identified SMO with photocatalytic properties, but due to its wide energy bandgap between valence and conduction band (3.2 eV), the UV light was necessary for organic pollutant removal from water, or, water split applications for H₂ production. Like in the case of previously described core-shell nanohybrids, an increase of the photocatalytic properties of TiO₂ was obtained when the plasmonic gold nanoparticles were incorporated in the TiO₂ matrix, which have also triggered visible light absorption on the noblemetal-TiO₂ nanocomposite, and thus, further increasing the efficiency of sunlight use for multiple applications, mentioned above. From this point of view, the recent results from literature suggest that the Au (core)@TiO₂ (shell) nanocomposites have superior photocatalytic properties, with respect to the traditional method of decorating the TiO₂ nanoparticles with plasmonic Au nanoparticle, due to the complete coverage of the plasmonic Au nanoparticle core by the TiO₂ thin film shell, thus, enhancing the amount of hot electrons generated in plasmonic Au NP and their transfer to the TiO₂ conduction band for being used in the redox photocatalytic reactions. (Tian-Ming Chen, Ge-Yang Xu, He Ren, Hua Zhang, Zhong-Qun Tian and Jian-Feng Li, "Synthesis of Au@TiO2 core-shell nanoparticles with tunable structures for plasmon-enhanced photocatalysis", published in Nanoscale Adv., 2019, 1, pp. 4522-4528). Different morphologies of Au NP were synthetized (nanosphere-NS, nanocubes-NC, nanoribons-NR) by means of the Au seed method which were obtained in the first step, while the TiO₂ layer covering the Au NP was deposited in the second step by the hydrolysis reaction of TiCl₃ under controlled pH of the liquid phase. Adhesion and adsorption of the TiO₂ precursors to the Au NP was possible due to the surface modification of the Au NP by means of the sodium dodecyl sulphate (SDS) which converted the positive surface charge into negative charge on the Au NP surface, and allowed the positively charged Ti(OH)²⁺ precursors to electrostatically bind to the negatively charged surface of Au NP. The initially amorphous state of the thus obtained TiO₂ layer (with thickness in the range of 4-20 nm) was converted to the crystalline state by thermal annealing at different temperatures from 300 to 500°C. This work has demonstrated that the Au NR (core)@TiO₂ (shell) nanohybrids had the highest photocatalytic activity in the degradation of the methylene blue (organic pollutant) in water, due to the presence of both transverse plasmon resonance of Au NR at 514 nm wavelength and longitudinal plasmon resonance of Au NR at 672 nm wavelength, while the TiO₂ optimum thickness was equal to 5 nm for the visible light illumination of the Au NR@TiO₂ core-shell nanohybrid. This paper has also demonstrated that by increasing the thermal treatment of the Au NR@TiO₂ core-shell nanohybrids from as as-deposited amorphous state to 300°C and finally to 500°C, there was (i) A gradual red-shift of the transverse plasmon absorption peak from 514 to 527 nm, while for the longitudinal plasmon absorption peak a red shift from 672 nm to 721 nm, which was correlated with the TiO₂ phase evolution to different crystalline states, (ii) An optimum thermal treatment of TiO₂ at 300°C, which, in our opinion performed a trade-off between the crystalline state and porosity of TiO₂ . Such trade-off was required for the O₂ and H₂O penetration to the Au NP-TiO₂ interface where redox reactions for ROS formation took place.

It is well known that CeO₂ is a low cost catalytic material for the CH₄, CO decomposition at low temperatures (Cornel Cobianu and Marin Gheorghe, "Inflammable gas sensor based on catalyst free of noble metals", Romanian Patent RO134411A2, publication date 2020-08-28). More recently, the plasmonic Au@CeO₂ core-shell nanohybrids were found as very efficient photocatalytic nanocomposites for the water split reactions aiming hydrogen production under visible light exposure. (Dung Van Dao et al, "Insightful understanding of hot-carrier generation and transfer in plasmonic Au@CeO2 core-shell photocatalysts for light-driven hydrogen evolution improvement", published in Applied Catalysis B: Environmental 286 (2021), 119947). CeO₂ is a semiconducting metal oxide with a rather lower energy bandgap of 2.8 eV, explained by the increased concentration of Ce³⁺ cations in the SMO composition. The Au@CeO₂ core-shell nanohybrids were obtained in two steps, where, in the first step the Au nanoparticles were prepared from chloroauric acid and trisodium citrate solution as a reducing agent (where the reaction time was of about 20 minutes), while in the second step, to the Au suspension, the Ce(NO₃)₃ and Na₂CO₃ were added at a temperature of 90°C under continuous stirring. The final Au@CeO₂ core-shell nanohybrid was obtained after extraction of the solid precipitate from suspension and calcination at 500°C in air. The average diameter of the Au NP's cores was equal to 18 nm. Different thicknesses of CeO₂ shells, in the range of 8-28 nm were obtained by increasing the amount of CeO₂ precursors in the second step. The very high efficiency of the photocatalytic H₂ production by the water split reactions was explained by the presence of the multiple plasmonic interactions between Au NP core and the CeO₂ shell defined in terms of (i) Enhanced Electromagnetic Radiation (EMR), as a radiative decay of SP resonances, where the resonant scattering of the light on the Au@CeO₂ core-shell NP's is equivalent to a 10³ increase of the incident light, and this radiation applied to CeO₂ is triggering an electron-hole pairs generation in the CeO₂, (ii) Hot Electron Transfer (HET), as a non-radiative decay of SP resonances, where the light absorption will generate pairs of hot electron (above Fermi level) and hot holes in the d-band of gold. Thus, the hot holes from d-band will contribute to the oxidation reactions generating ROS species (HO), while the hot electrons from gold will surmount the Schottky barrier at the interface Au-CeO₂ and reach the conduction band of CeO₂. There, these hot electrons will contribute to the reduction reactions of H⁺ (protons) which will become adsorbed hydrogen atoms and finally H₂ molecules. This HET mechanism is the most important photocatalytic process, (iii) Plasmon Resonant Energy Transfer (PRET) (Landau dumping), as a non-radiative decay of SP resonances, where there is a spectral overlap of the SP Resonances in gold (d-sp transitions in gold) and the ceria band-to-band absorption of light via excitonic generation of the electrons-hole pairs with free electrons in the conduction band of CeO₂ and (free) holes in the valence band, and (iv), Self-(photo)catalysis in CeO₂, due to direct absorption of the visible light on the CeO₂ nanomaterial, resulting in excitonic free electrons in the conduction band and excitonic (free) hole in the valence band of CeO₂. The synergetic interaction of the above mechanisms for free-charge generation and separation in the Au@CeO₂ core-shell nanohybrids has provided the maximum H₂ production efficiency for a CeO₂ thickness of 18 nm, which covered completely the Au NP core, and, also, assured an optimum porosity of the CeO₂ layer for allowing the water and hydroxyl groups diffusion to the surface of CeO₂ where redox reactions take place.

Recently, the plasmonic Ag@ZnO core-shell nanohybrids, have been also proved as efficient photocatalysts for the degradation of organic pollutants from water (as an example, the mineralization of commercial methyl orange in water was shown) (A.N. Kadam, D.P. Bhopate, V.V. Kondalkar, S.M. Majhi, C.D. Bathula, Anh-Vy Tran, Sang-Wha Lee, Facile synthesis of Ag-ZnO core-shell nanostructures with enhanced photocatalytic activity, published in Journal of industrial and Engineering Chemistry, Volume 61, 25 May 2018, Pages 78-86). Actually, the authors demonstrated that the photocatalytic efficiency of Ag@ZnO core-shell nanocomposites was six times higher than that of the pure ZnO, and four times higher than that of the commercial TiO₂ (the commercial product P25) in UV-VIS light. In this case, beyond the advantages of core-shell hybrids of a *maximum* metal-semiconductor contact, described above, the core-shell of Ag@ZnO morphology protected the Ag core from aggregation, leaking, and its deterioration from direct contact of Ag with the ambient/water. In addition, there is a well-known background related to antimicrobial activity of Ag and its toxicity (Janet Olayemi Olugbodi, Bashir Lawal, Godiya Bako, Amos Sunday Onikanni, Sulama M. Abolenin, Soliman S. Mohammud, Farid S. Ataya & Gaber El-Saber Batiha "Effect of sub-dermal exposure of silver nanoparticles on hepatic, renal and cardiac functions accompanying oxidative damage in male Wistar rats", Nature Portfolio, Scientific Reports | (2023) 13:10539 | https://doi.org/10.1038/s41598-023-37178-x). As mentioned above, A.N. Kadam et al. developed a simple method for the synthesis of the Ag@ZnO core-shell nanohybrid, consisting in two steps. In the first step, to a solution of AgNO₃, the surfactant cetyltrimethylammonium bromide (CTAB), the reducing agent ascorbic acid, and the NaOH reaction accelerator were added, mixed and stirred for about 15 minutes for preparing the suspension of Ag nanoparticles. In the second step, to this suspension, the ZnO₃, a precursor for Zn, and the binder Hexamethylenetetramine (HMT) were added and stirred for 5 minutes, followed by heating at 86°C. The resulted product was centrifuged and washed with deionized water and ethanol, followed by drying. The solid powder was calcinated at 500°C for 2 hours in air. At the end of this process, Ag@ZnO core-shell nanohybrids were obtained, where the spherical Ag NP core of diameter is of 10-15 nm, and the polycrystalline ZnO shell thickness is of about 45 nm. From TEM investigations, it appeared that no Ag₂O oxide was formed at the interface between Ag and ZnO! The UV-VIS absorption spectrum of the Ag@ZnO core-shell nanohybrids revealed the plasmonic, resonant absorption of Ag NP and the Ag absorption peak was red-shifted to about 402 nm, due to the rather small diameter of Ag NP, and the ZnO dielectric constant increase with respect water or air. In addition, as a very positive aspect with respect to use of catalyst in the sunlight (containing circa 5% UV light), even the excitonic UV absorption of ZnO via band-to-band electron transition was almost doubled with respect to pure ZnO nanoparticle. The increase of the photocatalytic activity of the Ag@ZnO core-shell nanohybrids with respect to ZnO, or, TiO₂ (P25) was explained by multiple mechanisms discussed for the other plasmonic noble metal@SMO core-shell nanohybrids from above, like enhanced hot-electron hot-holes pairs generation and their separation by means of the electric field from the Schottky junction, their redox contribution to the ROS production (O₂⁻, HO⁻), increased number of active sites for redox reactions due to increased porosity of the SMO shell layer, plasmonically-enhanced electromagnetic field (EMR).

Similarly, plasmonic Ag@TiO₂ core-shell nanohybrids were demonstrated to present enhanced photocatalytic properties in the sunlight with a higher red-shift of the plasmonic absorption peak of the Ag NP to the visible spectrum (peak at around 500 nm), due to a higher diameter of the Ag NP core, around 50 nm (Dachao Hong, Lian-Ming Lyu, Kenji Koga, Yoshihiro Shimoyama, and Yoshihiro Kon, Plasmonic Ag@TiO2 Core-Shell Nanoparticles for Enhanced CO2 Photoconversion to CH4, published in ACS Sustainable Chem. Eng., 2019, 7, pp. 18955-18964).

On the same direction, plasmonic Ag@CeO₂ core-shell nanohybrids with enhanced photocatalytic properties with respect to CeO₂ nanoparticles have been described, proving the major interest for the emerging plasmonic noble metal@SMO nanohybrids for a large family of applications. (Linen Wu, Siman Fang, Lei Ge, Changcun Han, Ping Qiu, Yongji Xin, Facile synthesis of Ag@CeO2 core-shell plasmonic photocatalysts with enhanced visible-light photocatalytic performance, published in Journal of Hazardous Materials, Volume 300, 30 December 2015, Pages 93-103). The highest photocatalytic activity of the Ag@CeO₂ core-shell nanowire types of nanohybrids was demonstrated for this nanomaterial. An excellent model of the redox reactions creating the ROS products is also presented by this paper.

From the above background on the plasmonic noble metal nanoparticles and plasmonic noble metal@SMO core-shell nanohybrid, it become quite obvious that these plasmonic nanomaterials will make a major contribution to the future applications of the photothermal and photocatalyst effects beyond those already described, on organic pollutant removal from water and water split reactions for H₂ generation. This is already confirmed by the emerging biomedical of the plasmonic nanomaterials, for the pathogen removal from the external surfaces, and plasmonic photodynamic therapy of cancer.

To prove the emerging character of the plasmonic nanocomposite materials for their antimicrobial activity, via the ROS production and reaction with the wall or DNA of the pathogen microbes (bacteria, viruses, fungi), a far-of-being-complete list of references which will be integrally included in the present invention, will be briefly mentioned here, as follows.
The paper of Violeta Dediu, Mariana Busila, Vasilica Tucureanu, Florentina lonela Bucur, Florina Silvia Iliescu, Oana Brincoveanu, and Ciprian Iliescu, "Synthesis of ZnO/Au Nanocomposite for Antibacterial Applications", published in Nanomaterials 2022, 12, 3832. https://doi.org/10.3390/nano12213832, has demonstrated the antimicrobial activity of the Au NP decorating the ZnO NP against Gram-positive bacteria *Staphylococcus aureus* and Gram-negative bacteria *Escherichia coli.*
The paper of Suresh Sagadevan et al, "Improved antimicrobial efficacy and photocatalytic performance of gold decorated titanium dioxide nanohybrid", published in Optik - International Journal for Light and Electron Optics 224 (2020) 165515, has described the antimicrobial efficiency of the Au NP decorating the TiO₂ NP against *Escherichia coli* (*E. coli*), *Staphylococcus aureus* (*S. aureus*), and *Candida albicans* (*C. albicans*)*.*
The paper of Kuldeep Negi, Ahmad Umar, M.S. Chauhan, and M. Shaheer Akhtar, "Ag/CeO2 nanostructured materials for enhanced photocatalytic and antibacterial applications" published in Ceramics International, Volume 45, Issue 16, November 2019, Pages 20509-20517, has demonstrated the improved catalytic antibacterial properties of plasmonic Ag doped CeO₂ NP with respect to pure CeO₂ for the inhibition of growth of the *S. aureus (gram positive) and P. Aureginosa* (*gram negative*). The paper of Tzu-En Lin et al., A Sensor-Integrated Face Mask Using Au@SnO2 Nanoparticle Modified Fibers and Augmented Reality Technology, published in ACS Omega, 2022, 7, pp. 42233-42241, has demonstrated the efficient activity of the Au@SnO₂ core-shell nanoparticles for combating global threats including pathogens and air pollutants.
The paper of K Suresh Babu et al., "Cytotoxicity and antibacterial activity of gold-supported cerium oxide nanoparticles", published in International Journal of Nanomedicine, at 27 November 2014 has shown that CeO₂ nanoparticles decorated with plasmonic Au NP have inhibitory effect on *Bacillus subtilis* in monoculture systems, followed by *Salmonella enteritidis, Escherichia coli, and Staphylococcus aureus,* while, in coculture tests with *Lactobacillus plantarum, S. aureus* was inhibited to a greater extent than the other bacteria.

It has been already shown that the photocatalytic effect of the plasmonic nanocomposites containing noble metal and semiconducting metal oxides is accompanied by the photothermal effect, which may become important depending on the intensity of the applied light. Thus, it is shown that in case of ZnO nanoribons decorated with Au nanoparticles, the local temperature at the surface of the Au NP was about 300°C for an incident laser with the 532 nm wavelength and incident power density of 250 W/m². Under these conditions the activation energy of the methylene blue degradation in the presence of Au-ZnO NP was by about 22.5% lower with respect to case when only photocatalyst ZnO was used, and the result was explained by the synergy of the photocatalytic and photothermal effects, but no discrimination between photothermal and photocatalytic effect was done. (Tanujjal Bora, David Zoepfl and Joydeep Dutta, "Importance of Plasmonic Heating on Visible Light Driven Photocatalysis of Gold Nanoparticle Decorated Zinc Oxide Nanorods", Scientific Reports | 6:26913 | DOl: 10.1038/srep26913 1). As the appropriate light illumination on the noble metal-based plasmonic nanocomposite generates simultaneously photocatalytic and photothermal effect, the discrimination between them can be performed only in the case when the local temperature can be measured during illumination and compared with thermal catalysis of the same chemical reaction performed at same temperature. (Linan Zhou, Dayne F. Swearer, Chao Zhang, Hossein Robatjazi, Hangqi Zhao, Luke Henderson, Liangliang Dong, Phillip Christopher, Emily A. Carter, Peter Nordlander, Naomi J. Halas, Quantifying hot carrier and thermal contributions in plasmonic photocatalysis, Science 362, 69-72

(2018) 5 October 2018 1). In this case the role of plasmonic hot carriers was well separated from the temperature role, and it was shown that for the resonant photocatalysis at the same temperature, the H₂ production rate for the catalytic ammonia decomposition on Cu-Ru catalyst was 100 times higher than the thermocatalysis in dark. The result was explained by a major decrease of activation energy of the reaction by the photocatalytic effect.
Even if the above description of the prior art is enough detailed to support the present invention, it is important to mention that there is a much more extended list of papers describing the catalytic effect of most of the transition metal oxides, like VO₂, Mn₂O₃, Co₃O₄, NiO, Fe₂O₃, MoO₃, and its binary and ternary composites, just to give more examples.

There is a rich prior art family of patents concerning the utilization of the photocatalytic composites for (i) microbe removal from critical hard surfaces, like hospital walls or other medical utensils, (ii) efficient hydrogen photocatalytic production by water split reactions, and (iii) organic pollutant removal from water, to mention the most important ones, as follows.

The European patent EP 0626355 A1 published on 30 November 1994 discloses a wall material consisting of mixing composite polymer emulsion including acrylic ester copolymer and ceramic powder into the mortar, where both the polymer emulsion and ceramic powder (like TiO₂, CrO₂) act as sterilizing agents against pathogenic microbes like methicillin resistant staphylococcus aureus (MRSA) and pseudomonas aeruginosa. While the disclosed acrylics and the organic pigments from the wall material composition will help light absorption in the visible light spectrum, the added ceramic powder will be photoactive against pathogenic bacteria only in the UV light range (which correspond to 3-5 % of the total solar light spectrum), and therefore, overall this disclosed formulation may have a reduced overall antimicrobial efficiency, not to mention the high value of the ceramic particles from 74 to 149 µm, which may minimize the number of bioactive chemical sites.

The patent US 2014/0205546 A1 published on 24 July 2014 provides antimicrobial formulations (MRSA, methicillin sensitive staphylococcus aureus-MSSA) for medical, pharmaceutical, cosmetic applications, which can be applied on skin, hair, or hard surfaces, and which are consisting of nanoscale particles (of size equal to 5-200 nm) and a film forming polymer. A large family of organic film-forming polymers is disclosed like: polyolprepolymer-2, poly(styrene-co-maleic-anhydride) copolymers (SMA), polyurethane, while the disclosed nanoparticles are silver (elemental and colloidal, or silver oxide), titanium (titanium oxide), zinc (zinc oxide), aluminum (aluminum oxide), iron (iron oxide), copper (copper oxide), platinum (platinum oxide), zirconium, palladium, gold, their salts and combinations. Definitely, with respect to the previously described patent, EP 0626355 A1**,** this 546 A1 patent is focusing on antimicrobial photocatalytic materials like TiO₂, ZnO, Ag₂O *at nanoscale,* applied for the visible and UV range. This is a step forward in the field, as it is also adding a large number of metallic nanoparticles in their formulation. However, as it will be shown in our invention to be described below, there are much more advanced methods and technologies for the increase of the antimicrobial efficiency of the nanomaterials, which will allow enhancement of the antimicrobial response by creating binary nanocomposites with controlled size of all their components. Unlike this invention from prior art, our method will assure extended photocatalytic response to the entire solar light spectrum, an amplification of the bactericidal activity, and a long-term stability of the nanocomposites, with respect to this US 2014/0205546 A1 patent where the authors accept that for their films there is fading or loss of color reducing the antimicrobial films, which requires re-painting.

The patent US 2020/0392351A1, published on 17 December 2020 discloses an antimicrobial and antifungal washable paint with photocatalytic properties, in the 450-500 nm spectral range. The paint is used as a self-disinfecting film applied on the interior surfaces of the rooms of hospital, schools and other critical public locations, which are exposed to the visible spectrum of ceiling lamps or portable lighting devices. The paint film consists of typical organic components described in the previously described patent and inorganic photocatalytic particles like TiO₂ and ZnO doped with Ag, Au, Cu, Ni, Fe, Cr, Ni, Mn. With respect to the previous US 2014/0205546 A1 patent, the patent US 2020/0392351A1 extends the previous list of transition metals with Mn, Ni, Co and Cr to be used as dopants for the TiO₂ and ZnO, and it gives more precise formulations for the painting film in terms of mass percentual fraction of the organic components and inorganic photosensitizers (which sensitizer in the visible spectrum is an Au, or Ag metal (nano)particle and not the TiO₂ or ZnO !). Unfortunately, the US 2020/0392351A1 patent limits the operation of the photocatalytic paint film to only 450-500 nm wavelength band, even if for example silver has a visible light absorption band at about 400 nm. Therefore, for the incident light used, the photocatalytic effect is practically not present! On the other hand, in this 2020/039235A1 patent, there is no description of a possible optimization methodology for the particle size of the inorganic metal oxide and metal photosensitizers (nano)particle size so that the paint to benefit from the antenna effect of light resonant absorption in the presence of the photocatalytic plasmonic processes to be further described in our invention.

The patent US 2024/0081335 A1 published on 14 March 2024 discloses an inorganic pigment consisting of three "layers" (TiO₂-2D pseudoperovskite-1 nm thick noble metal cluster). According to the invention's author, the disclosed pigment may be included in the composition of building materials or cosmetic products. Due to its action as both a photocatalyst in the presence of the visible light, or as a catalyst in the absence of light, the disclosed inorganic pigment is proposed to be used for the removal of the pathogenic bacteria, viruses or fungi for the above specified applications. However, in our opinion, the experimental demonstration of the increased light absorption of the disclosed pigment in the entire visible light spectrum (400-700 nm) is not correct as long as the author shows that the experimental reflectance spectrum and not the absorption spectrum of the pigment is increased with respect to anatase or rutile TiO₂. As a matter of fact, for a plasmonic resonance in the 400-700 nm light spectrum, the reflectance spectrum should show a minimum value, due to the maximum absorption spectrum in that specified range. In addition, from the description of the synthesis method, where all the subsequently added components are thoroughly mixed with the previously added ones, it appears that the final inorganic pigment is rather a mixture of all the reaction products of the added precursors, and not a "stack" of three separated layers, where the noble metal (Au, Ag, Cu) to be present as clusters not thicker than 1 nm. Under these considerations, the explanations of the results in terms of plasmonic phenomena at the interface between the noble metal and perovskite material are not correct from the principial point view, where a key requirement is the size of the plasmonic noble metal nanoparticles, which has to be much higher than 1 nm, in general, at least in the range of 20-30 nm for the generation of an efficient surface plasmon resonance (SPR) at the interface. The author discloses the fact that he obtains noble metal clusters thinner or equal to 1 nm and not nanoparticles, as required by the SPR condition. Our invention, to be disclosed below, and which is not based on photocatalysts containing perovskites, concerns to a different nanocomposite material synthesis, while the size and shape of the noble metal nanoparticles obey to the required conditions for the generation of the plasmonic effects in the presence of the solar spectrum. In addition, our invention discloses that for a maximum efficiency of the pathogen agent removal more parallel mechanisms will be simultaneously activated, as it will be further described in detail in the next sections of our disclosure.

The patent US 2023/0158481 A1, published on 25 May 2023, discloses a method for the fabrication of a plasmonic photocatalytic active degradative sol, a degradative coating, and a degradative surface to be used for the removal of the pathogenic agents and the organic pollutants, and also for photocatalytic application, like water split reactions for hydrogen generation. The visible-light responsive plasmonic photocatalytic nanocomposites disclosed by the authors for the above applications consist of TiO₂ commercial nanoparticles (10-50 nm in size) decorated with Au and/or Ag nanoparticles (10-20 nm in size for gold and 2-6 nm thickness of silver deposited on Au nanoparticle) UV-photodeposited on TiO₂. The authors demonstrate their ability to design the composition of the Au/Ag decorated TiO₂ nanoparticles so that to perform a tuning of surface plasmon resonances (SPR) of the plasmonic nanocomposite to one or more maxima of the incident visible light, after they get inputs from the user about the type of lighting device. With respect to this patent application, our invention is disclosing a totally different nanocomposite synthesis method, an extended family of semiconducting metal oxide nanoparticles, a different strategy of designing the composition of the plasmonic photocatalytic nanohybrid, so that the well-known narrow wavelength absorption band specific to the plasmonic nanohybrids to be extended to the entire solar light spectrum. Thus, our disclosure is able to exploit the absorption of the whole solar light spectrum (UV and near IR included), and thus no need to replace the degradative surface composition of the user, whenever the lighting devices solutions are changed. In addition, for the case of the antimicrobial surfaces, under specific lightening conditions of the critical surfaces, our invention brings a supplementary mechanism of killing the pathogenic agents, as it will be shown in the next sections. The final reason of our invention for considering the light harvesting from the entire sunlight spectrum is that this light coming from outside through windows is present in the critical spaces (for free) during the daytime, so its exploitation will increase the efficiency of the photothermal and photocatalytic processes.

The patent US 2022/039 0147 A1 published on 8 December 2022, discloses composite materials containing TiO₂-like semiconducting metal oxides (able to absorb UV and NIR light), precious metals (able to absorb visible light) for applications where photothermal heating and photocatalytic removal of pathogenic agent can be used in processes like sewage treatment and efficient water desalination in the presence of solar light, with low consumption of electric energy. Even if the authors do not describe in detail the physics and chemistry of the heating and photocatalytic processes, the indication of the photothermal effect due to the light absorption on the entire solar light spectrum, and of the photocatalytic effect which are acting in parallel, are supporting our disclosed concept, which develops novel compositions of plasmonic photothermal and photocatalytic nanohybrids able to resonantly absorb the light in the entire solar light spectrum from UV up to NIR range.

The above prior art patents are focusing on tuning the synthesis of the plasmonic nanocomposites with resonant light absorption in the visible range, even if the solar light spectrum is much broader, from UV to IR wavelengths. On the other hand, the resonant absorption bands of the plasmonic nanocomposites based on noble metals and metal oxides are wavelength-narrow, and therefore, much of the incident solar light spectrum remains unexploited. The same deficiency appears in the case of the plasmonic photodetectors based on interdigitated Schottky junction between noble metal electrodes and a semiconductor. One of the authors of the present invention solved (also) this plasmonic shortcoming by designing a plasmonic photodetector containing multiple plasmonic photodetectors connected in parallel, and where each detector was designed to have a resonant plasmonic absorption at a different wavelength of the incident light, as described in the European patent, EP 4246597 A1 published on 20 September 2023. ("Multiband, Multi-polarization Plasmonic Photodetector and Fabrication") and the European patent EP 4287277B1 granted on 16 October 2024 (Reconfigurable Plasmonic Photodetector and Fabrication Method). However, in those inventions, the resonant plasmonic absorption was obtained at the interface between thin films noble metal and a large bandgap semiconductor. For the present invention to be described below, the "multiband" resonant plasmonic absorption will be obtained in a different way by using different noble metal nanoparticles embedded in different metal oxide semiconductors. Thus, a broad plasmonic resonant absorption band will be able to harvest solar light from UV up to NIR wavelength spectrum.

The patent US 7820291 B2, granted on 26 October 2010 discloses a general method of the preparation of core-shell nanocomposite consisting of noble metal core like Au, Ag, Pt and metal oxide shell like TiO₂, ZnO, CeO₂, SnO₂. The method consists of two steps. In the first step the metal nanoparticle core is obtained by the well-established processes described above, while in the second step the metal oxide is grown on the core by a well-controlled sol-gel process, with a very low reaction rate of the hydrolysis and condensation reactions. The novelty of that disclosure comes from the fact that the final metal oxide shell layer is obtained (epitaxially) directly in the crystalline state at the end of the second step, without the need of any subsequent thermal treatment after the wet synthesis. This as-prepared crystalline state of the shell was possible by controlling very well the hydrolysis reaction rate of the metal oxide *organic* precursor, keeping it as low as possible. Under these conditions, during the hydrolysis and condensation reactions specific to the sol-gel formation of the metal oxide, the atoms of the growing metal oxide were able to follow the crystalline order of the metal core. For this purpose, the amount of water added for the hydrolysis reaction was very low, while the *organic* metal oxide precursors were diluted in organic precursors and were chelated (surrounded) with organic groups of the specific solvents, which have also reduced the hydrolysis and condensation reactions required for the metal oxide shell preparation. However, like in the other prior art patents, there is no preoccupation for solving the basic limitation of narrow band absorption of the plasmonic nanomaterials, and this will be one of the biggest differences between our invention and the prior art inventions and associated patents.

An alternative method to the above sol-gel approach for the growth of metal oxide shell layer on the (Au, Ag) noble metal core, is the precipitation method. Here, the core-shell Au@ZnO, Au@TiO₂, Au@SnO₂, Au@CeO₂, Ag@ZnO nanocomposites are obtained by the precipitation of the solid-state metal oxide layer from the liquid state on the noble metal core, which was prepared in the first stage. In the second stage of the synthesis via the precipitation method, inorganic precursors of the metal oxide, like zinc nitrate, Zn(NO₃)₂, or, titanium chloride, TiCl₃, or, cerium nitrate hexahydrate, Ce(NO₃)₃ x 6 H₂O, or sodium tin (IV) oxide trihydrate (Na₂SnO₃ x 3H₂O) are added to the aqueous suspensions containing the noble metal core, reducing agents like NaOH and NaBH₄, neutralizing agents like NaHCO₃, and different surfactants like polydiallyldimethylammonium (PDDA) in ethylene glycol solution, or Cetyltrimethylammonium chloride (CTAC) and others. In the case of a controlled precipitation reaction occurring at a low reaction rate, similar to the sol-gel methodology, a polycrystalline metal oxide shell layer is obtained like in the particular situation of the core-shell Au@ZnO nanocomposites from the background. Detailed descriptions of the precipitation reactions for each of the metal oxide shell to be obtained by the precipitation method can be found in the papers cited above, in the background of our invention.

An important aspect of the SMO-noble metal nanocomposites embedded in solid-state painting layers applied for the antimicrobial protection of the room walls of hospitals and other critical public infrastructure is the recent EU and US legislation requirement of water-born (solvent-free) green coatings, for which the volatile organic compound concentration to be below 350 g/L of water. Under these conditions, the mix of the organic and antimicrobial precursors aiming a chemically stable suspension to be further painted on the hospital walls and other critical utensils has been intensively studied, as already shown in the prior art patents from above. Recently, it was found that the functionalization of acrylic latex binders with semiconducting metal oxide nanoparticles like ZnO, MgO, La₂O₃, or their combination could generate both improved mechanical and antimicrobial properties of the wall painting layers, when the concentration of the SMO nanocomposite is about 0.5-1.3 wt% relative to the polymer content. (Denisa Steinerová et. Al., Influence of Metal Oxide Nanoparticles as Antimicrobial Additives Embedded in Waterborne Coating Binders Based on Self-Crosslinking Acrylic Latex, Coatings 2022, 12, 1445. https://doi.org/10.3390/coatings12101445).

As mentioned in the above sections of our invention background, there is an well-established methodology for the chemical design and fabrication of the Au or Ag nanoparticles with different sizes (9-200 nm) and morphological shapes (nanospheres, nanoribons, surface roughness nanocubes, nanooctahedral), which will not be repeated here, and, therefore it will be included in its integrality in the implementation of our novel fabrication method of core (noble metal)-shell (metal oxide) nanocomposites for the broad plasmonic absorption wavelength band of the solar light, from UV up to NIR wavelength.

The major interest for the controlled fabrication of the monodisperse Au nanoparticles of different sizes and shapes and which are functionalized with different chemical organic species has determined the commercial companies like Sigma Aldrich owned by Merck to fabricate and deliver a large portfolio of monodisperse Au nanoparticles, with the size ranging from 5 nm to 100 nm, covering the entire visible range of light absorption, as described above, https://www.sigmaaldrich.com/RO/en/substance/goldnanoparticles1234598765?page=1 and also monodisperse Au nanoribons of different sizes covering the end of visible range and the beginning of the near infrared absorption range from 600 nm to 980 nm. https://www.sigmaaldrich.com/RO/en/search/au-nanorods?focus=products&page=1&perpage=30&sort=relevance&term=au%20nanorods&type=produ ct. Such commercial Au nanomaterials of high quality, with dimensional variations below 15% in their size, can be directly used as starting Au cores, which can be further completely covered with thin layers of the semiconducting metal oxides to be used as shells, as defined within this invention.

Similarly, there are commercially available silver (Ag) nanosphere nanoparticles, of very tight control of shape and size, in the range of 20-200 nm size, which are supplied by Sigma Aldrich owned by Merck, and which can be directly used as plasmonic Ag cores to be then covered by SMO shells, as described above. For example, in the attached site from below, one can find a comparison of the visible absorption spectra of the Ag nanospheres with size varying from 20 nm to 60 nm, while the narrow plasmonic peak of absorption will vary from 390 nm for the Ag nanosphere size of 20 nm to 420 nm for the Ag NP size of 60 nm. https://www.sigmaaldrich.com/RO/en/product/aldrich/806986. In addition, the reference paper written by Steven J. Oldenburg and Aaron E. Saunders, called "SILVER NANOMATERIALS FOR BIOLOGICAL APPLICATIONS", published in the "Materials Matters" Journal, vol. 9, Number 2, page 64, shows that by varying the size of the silver nanoplates nanoparticles, one can vary the peak of the plasmonic absorption band of Ag nanoplates cores from 500 nm (VIZ range) up to 1000 nm in the NIR range. Such Ag nanoplates cores covering the above VIZ-NIR range can be also used by our invention, after covering them with SMO shell as described above.

### SUMMARY

The present invention is disclosing a radically new methodology for the chemical design and fabrication of UV-VIZ-NIR wideband absorption plasmonic nanocomposites, NCi, consisting of mixing core-shell groups, where each group will consist of plasmonic noble metal (Au or Ag) cores of the same type, shape and size, which is covered by a semiconductor metal oxide (SMO) shell of the same thickness and crystalline structure, like, for example, ZnO, TiO₂, SnO₂ and CeO₂. Each group of the NCi nanocomposite thus formed will have a narrow plasmonic absorption band, and therefore, by mixing such core-shell groups a high absorption intensity, wideband high intensity absorption of the NCi is obtained due to the superposition of the individual, high intensity, narrowband of each group. By this original nanomaterial synthesis methodology, a very efficiently plasmonic absorption of the sunlight, or any broad-spectrum lighting source from ultraviolet (UV) up to visible (VIZ) and near infrared (NIR) wavelength is obtained, and this enhanced plasmonic absorption will further increase the efficiency of the photocatalytic and photothermal process of multiple industrial and bio-applications. Such novel wideband plasmonic nanocomposites (NCi) of broadband light absorption will be included in the formulation of the new solid nanomaterials and films applied in critical bio-medical antimicrobial applications, or as powder in process industry for photocatalytic organic pollutant removal from water, or, in water split reactions for hydrogen production. Exemplary embodiments will disclose novel wideband plasmonic nanocomposites (NC) types, NCi, (with i varying from 1 to 12) where each NCi type is containing *a mixture* of different Au nanospheres and nanorods core (Gj) @SMO shell groups, (with j from 1 to 6), or, Au octahedral nanoparticle core (OEk)@ SMO shells groups, (with k from 1 to 4), or, silver nanospheres (AGI)@SMO group (with I varying from 1 to 2) combined with G4@SMOG6@SMO groups, and where each such plasmonic core-shell group, will consist of plasmonic Au or Ag NP's of the same size and shape (nanosphere, nanorods, octahedral) used as cores, and SMO, like ZnO, or TiO₂, or CeO₂ or SnO₂ used as very thin film shells. For the light harvesting from UV up to VIZ and NIR spectrum, the exemplary embodiments will exploit the plasmonic *narrow* absorption band specific to each core (Gj, OEk, AGI) @shell (ZnO, TiO₂, SnO₂, CeO₂) group, and the broad plasmonic absorption band which is obtained by the superposition of the above narrow plasmonic absorption bands of all these groups of noble metal core @ SMO shell, which are mixed. The total mass of the novel nanocomposite, NCi, is equal to the sum of the masses of these component groups, where each such component group consists of the same type, shape, and size of the Au or Ag nanoparticle used as core, which is covered by a SMO very thin film shell.
Thus, one aspect of the present invention refers to a wideband plasmonic nanocomposite with enhanced light absorption in the ultraviolet-visible-near infrared spectrum and enhanced photocatalytic and photothermal behavior,
wherein said wideband plasmonic nanocomposite consists of a multitude of plasmonic core-shell groups, wherein:
- each plasmonic core-shell group consists of core-shell nanohybrids, wherein all the core-shell nanohybrids of each group are made of:
   - cores of plasmonic noble metal nanoparticles of the same type, shape and size, which are completely covered by
   - shells made of films of semiconducting metal oxide of the same type and thickness;
   and
- each of said plasmonic core-shell groups is configured to efficiently absorb a different band of the light wavelength spectrum than the other plasmonic core-shell groups.

Said types of noble metal nanoparticle core are: Au (gold) or Ag (silver), and said shapes are selected from: nanospheres, nanoribbons, nanorods, octahedra. For example, all the cores in one plasmonic core-shell group may be: gold nanospheres, gold nanorods, gold octahedral nanoparticles or monodisperse silver nanospheres. Also, all the cores in one plasmonic core-shell group are the same size, such as, for example, they may all be Au nanospheres having a diameter of 10nm, or, 40nm, or 100nm, Ag nanospheres having a diameter of 30nm, or 80nm, Au nanorods of 60 x 25nm, or 65 x 10nm, or 70 x 25 nm, or Au octahedral nanoparticles having an edge size of 20, or 63, or 125, or 125 nm. The type, shape and size of the noble metal nanoparticle cores are the same for each core group, and preferably the cores in each group differ by at least one of: the type, shape and/or size from the cores of any other group.

The cores are covered by said semiconducting metal oxide films, which can be made of any semiconducting metal oxides, preferably of: ZnO, TiO₂, SnO₂, CeO₂. For example, CuO, Co₃O₄, Cu₂O, NiO, VO₂, Fe₂O₃, Mn₂O₃ are broadly documented in the prior art for their catalytic properties. These semiconducting metal oxide films are very thin films, having a thickness of about 5 to 30 nm, preferably of about 10 to 20 nm. In preferred embodiments, for ease of preparation, the cores of all plasmonic core-shell groups are covered by films of the same semiconducting metal oxide, having the same thickness.

Said multitude of plasmonic core-shell groups comprises at least two, at least three, at least four groups, preferably 4, 5 or 6 plasmonic core-shell groups. The type and/or shape and/or size of the core nanoparticles in each group, and also the type and thickness of the semiconducting metal oxides are chosen such that each of the core-shell-plasmonic groups efficiently absorbs a different band of the light wavelength spectrum than the other plasmonic core-shell groups. Preferably, the cores of each group differ from the cores in any other group either by type, shape and/or size. In preferred embodiments, each of said plasmonic core-shell groups absorbs in a narrow band of the light wavelength spectrum that is less than 300 nm-wide, such as about 200 nm-wide, about 150 nm wide, or about 100 nm-wide. More preferably, the absorption band of each of said multitude of plasmonic core-shell groups is in partial superposition with the absorption band of at least one of the other, neighboring, plasmonic core-shell groups. This has the advantage that, together, all the groups of the nanocomposite are able to absorb light at all wavelengths from NIR (near infra-red), VIZ (visible light) to UV (ultra-violet).

In one embodiment, novel wideband plasmonic nanocomposites, NCi (with i from 1 to 4) are disclosed, where each NCi consists of a mixture of Au core Gj @SMO shell groups, (with j from 1 to 5) where each core Gj @shell group consists of Au nanoparticle cores of a specific shape and size which are covered by the same type of SMO thin film as a shell (like ZnO, TiO₂, SnO₂, CeO₂). These novel plasmonic wideband nanocomposites, NC1-NC4 will be used for efficient harvesting of the solar light from the entire wavelength spectrum and for multiple bio-medical and industrial applications as mentioned above.

In another embodiment, other novel plasmonic wideband absorption nanocomposites, NCi (with i from 5 to 8) are disclosed, which each NCi is obtained by mixing different core OEk @SMO shell groups, (with k from 1 to 4), where each OEk@ SMO group consists of octahedral gold nanoparticles of a specific size and shape used as core and each of the SMO's described above used as thin film shell. The total mass of each NCi novel nanocomposite will be again equal to the sum of masses of the OEk@ SMO shell groups, similar to the description from previous paragraph. This novel plasmonic nanocomposite can be also used for efficient harvesting of the solar light from the entire wavelength spectrum and for multiple bio-medical and industrial applications, as mentioned above.

In another embodiment, other novel plasmonic wideband absorption nanocomposites NCi (with i from 9 to 12) are disclosed, which are obtained by mixing different core-shell groups, like AG1@ SMO shell and AG2 @SMO shell, (where each AG core consists of silver nanospheres of a specific size), and different gold cores Gj @ SMO shell groups, (with j varying from 4 to 6), where each Gj core is consisting of Au nanoribons of a specific size. All these cores, AG1, AG2 (of silver nanospheres) and G4-G6 (of gold nanorods), of these NCi are covered by SMO shells (ZnO, or TiO₂, or, SnO₂, or, CeO₂). These novel NC9-NC12 nanocomposites will be also able to plasmonically absorb the sunlight in the entire UV-VIZ-NIR wavelength spectrum. The total mass of this type of these novel NC9-NC12 nanocomposites will be obtained as described above, from the sum of the masses of the core-shell groups AG1@ SMO, AG2@SMO, G4@SMO, G5@SMO and G6@SMO, where SMO type is described above.

In another embodiment, the fabrication method of the novel plasmonic nanocomposites, NCi, (with i varying from 1 to 4) consisting of the Au core Gj @SMO shell groups, (with j varying from 1 to 5) will be described. These novel nanocomposites, NC 1-4, will benefit from the excellent achievements from the last decades, from the field of monodisperse Au nanoparticle core synthesis, which is now at the mass fabrication level, in commercial companies, as described above. Such metal nanoparticles can be subsequently covered with SMO thin film shells, for obtaining the core Gj@ SMO shell groups. The novelty of our plasmonic NC 1-4 fabrication method will come from the mixing process of the plasmonic core Gj @SMO shell groups, so that the narrow enhanced plasmonic absorption band of each Gj @ SMO shell to contribute to the enhanced plasmonic wideband of sunlight absorption, obtained by a superposition process. Thus, it is disclosed a method for the fabrication of a wideband plasmonic core-shell nanocomposite with enhanced light absorption in the ultraviolet-visible-near infrared spectrum, enhanced photocatalytic *and* photothermal behavior, said method comprising the steps:
a) providing at least two, at least three, preferably 4, 5 or 6 groups of noble metal nanoparticle cores of gold (Au) or silver (Ag), wherein the type, shape and size of the noble metal nanoparticle cores are the same for each core group, and wherein the noble metal nanoparticle cores in each group differ by at least one of: the type, shape and/or size from the cores of any other group
b) depositing on each of the cores of step a) a semiconducting metal oxide film shell, in liquid phase, in a thickness of about 5 to 30nm, preferably about 10 to 20nm, wherein the type of said semiconducting metal oxide is chosen from: ZnO, TiO₂, SnO₂, CeO₂, or any of the semiconducting metal oxides (e.g. CuO, Co₃O₄, Cu₂O, NiO, Fe₂O₃, VO₂, Mn₂O₃) , to obtain core-shell groups, wherein all the cores of one group have shells of the same type and thickness,
c) mixing and calcinating at about 400 to 500°C the core-shell groups obtained in step b). In step a) of the described method the cores may be obtained from any source such as from the market or by producing them in-house. All the cores in one of said groups have the same type, shape and size, for example they may all be gold nanospheres of the same size, gold nanoribons of the same size, silver nanospheres of the same size, or gold octahedra of the same size. The core nanoparticles from one group differ from those in any other group in type, shape and/or size, which leads to the fact that each group absorbs light in a different band than the other groups.

In a preferred embodiment, for a more easy end efficient production process, all the cores of step a) are covered in step b) by the same type of semiconducting metal oxide film shell, having the same thickness.

In another embodiment, the fabrication of other wideband, novel plasmonic NCi nanocomposites (with i varying from 5 to 8), consisting of mixing different core OEk@ SMO shell groups, is disclosed for a broadband light spectrum harvesting. In this case, each group OEk@ SMO shell (with k varying from 1 to 4) consists of gold octahedral nanoparticle cores of a specific size and the same type of SMO thin film shell. The fabrication process will follow the similar steps described with the distinction that the first step of the fabrication of each plasmonic OEk@ SMO shell group is the synthesis of the monodisperse octahedral Au core nanoparticles, with each OEk containing gold nanoparticles of a certain size, and which core will be covered in the second step by a certain SMO thin film shell. For obtaining a broad absorption band nanocomposite, NCi, in the third step a mixing process of the above OEk@ SMO shell groups will occur, as each OEk@ SMO group is absorbing only a narrow wavelength band of the incident sunlight spectrum.

In another embodiment, the fabrication of other wideband novel plasmonic NCi nanocomposites (with i varying from 9 to 12), consisting of mixing core AG1@ SMO shell group with AG2@ SMO shell, (each AG core consisting of silver nanosphere cores of a specific size) and with the previous core G4 @ SMO shells and with the G5 core @SMO shell groups (each G core consisting of Au nanorods of a specific size) will be disclosed for harvesting the light from UV to VIZ and to NIR range.

In another embodiments, the applications of these novel wideband plasmonic nanocomposites are disclosed, where the novelty consists in integration of these new high efficiency plasmonic nanomaterials in existing well established, bio-medical applications or catalytic processes for organic pollutants removal from water, or water splitting reaction for hydrogen generation, as potential energy source. As a biomedical application, one can mention the solid-state antimicrobial paint coating applied on the critical inner room walls of the private or public institutions, like hospitals and surgery wards, operating rooms, crowded areas, kindergartens, schools, nursing homes, and many others that serve sick or healthy people. Such wall paint coating is obtained by incorporating the colloidal solution of the novel wideband plasmonic nanocomposite in the existing compositions of the of acrylic latex binders, from the state of the art. In addition, the solid-state thin films obtained by spraying the colloidal solutions of the novel wideband plasmonic nanocomposite on the outer surface of the medical utensils, like, scissors, cutters, tweezers etc., followed by a thermal annealing for the thermal consolidation of the liquid phase on the solid substrate of the medical utensils. For the addition of the photothermal effect on the room walls to the existing photocatalytic effect, a portable or a fix illumination system with higher intensity of the light coming from a broadband light source covering ultraviolet, visible and near infrared can be periodically used, as a clean and easy to apply antimicrobial treatment method. The novel wideband plasmonic composite of the present invention is improving the photocatalytic efficiency of the water split photoreactors by simply replacing the existing metal oxide-based methods, or even the plasmonic core-shell (Au@TiO₂) photocatalyst with the present wideband nanocomposite disclosed by the present invention. Finally, the novel wideband plasmonic nanocomposite disclosed by the present invention can replace the existing photocatalysts for organic pollutant removal from water as described in the background of this invention. It can be also personalized based on regional solar emission spectrums to ensure the maximum efficiency (e.g., variations in irradiance and spectrum between the hemispheres, continents, or at altitudes).

Finally it is good to mention that the high efficiency of the original core-shell plasmonic nanocomposites, NCi, briefly described above will come from (i) The original nanomaterial composition, as explained in the previous paragraphs, (ii) The maximum area of the Schottky junction formed between the noble metal core and the metal oxide shell, which junction is thus extensively separating the free carriers like hot electrons and holes, plasmonically generated in the noble metal or excitonically generated in the semiconducting metal oxide, and (iii) The solar light harvesting from its entire wavelength spectrum and the synergetic action of the photothermal, photocatalytic effects, to which the cation release effects inside the target medium may be added for antimicrobial coatings.

### BRIEF DESCRIPTION OF THE DRAWINGS

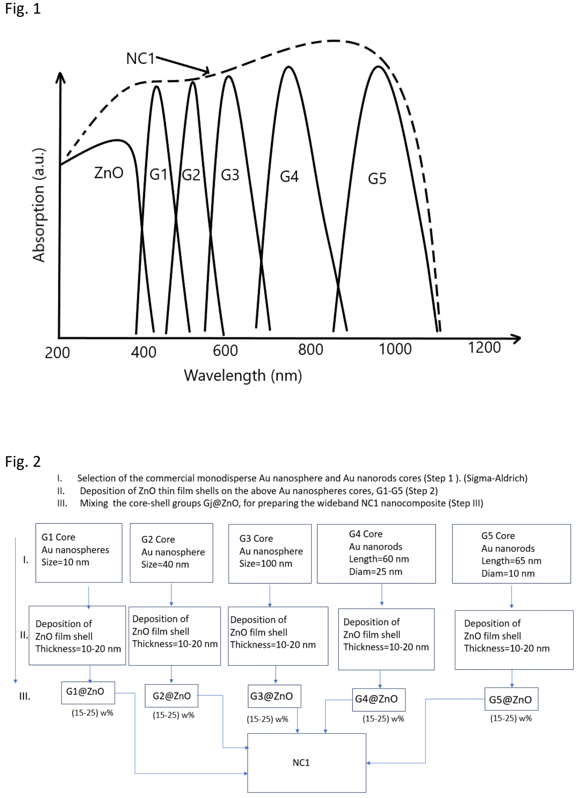

The embodiments of the present disclosure will be described only as an implementation example, by reference to Fig. 1, and the Tables 1-3, as follows:
Fig. 1. The generic light absorption spectrum of the wideband plasmonic nanocomposite, NC1, (dashed plot) obtained by mixing five plasmonic core-shell groups, G1@ZnO, G2@ZnO, G3@ZnO, G4@ZnO and G5@ZnO, as function of the incident light in the wavelength spectrum from ultraviolet (200 nm) up to near infrared (1100 nm). Each core-shell group, Gj@ZnO, from above consists of plasmonic gold nanoparticles of a certain shape and size, which are covered by a ZnO thin film shell, with the morphology and optical features described in the Table 1.

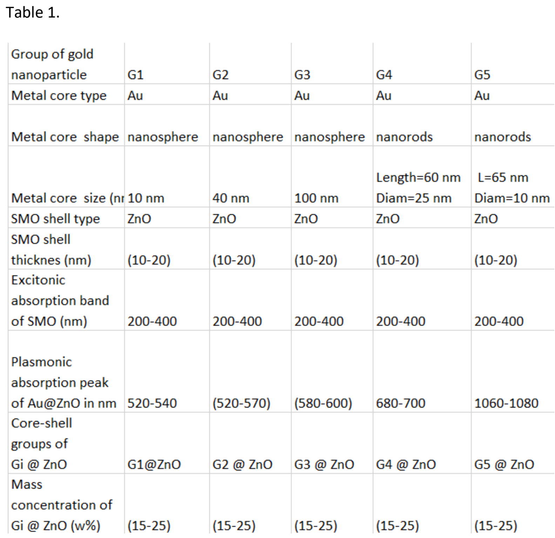

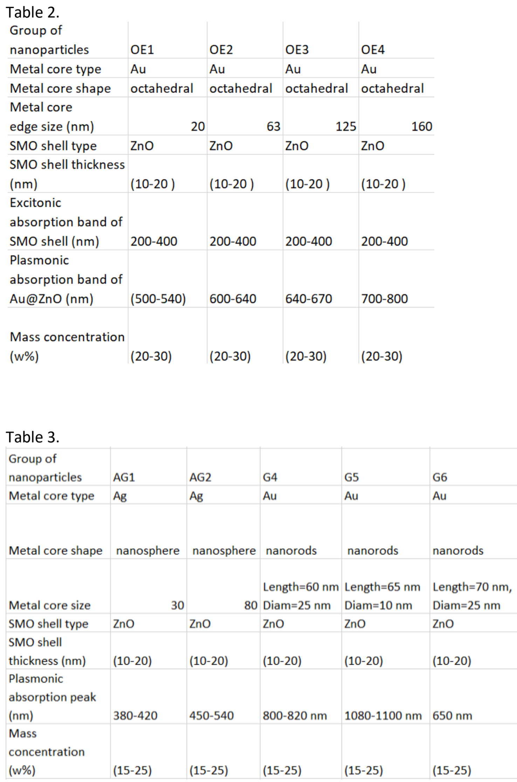

Fig. 2. Schematic generic technological process flow for the fabrication of the wideband plasmonic nanocomposite, NC1, functionally characterized in Fig. 1, and morphologically and compositionally described in detail in Table 1.

Table 1. Morphological, compositional and optical absorption properties of the wideband plasmonic nanocomposite, NC1, consisting of mixing five core-shell plasmonic groups, Gj@ZnO, where each core-shell plasmonic group consists of plasmonic gold nanoparticles of a certain shape and size, which are then covered by the ZnO thin film shell.
Table 2. Morphological, compositional and optical absorption properties of the wideband plasmonic nanocomposite, NC5, consisting of mixing four core-shell plasmonic groups OEk@ZnO (with k varying from 1 to 4), where each core shell-plasmonic group consists of octahedral gold nanoparticles of a certain size, which are then covered by the thin film shell.
Table 3. Morphological, compositional and optical absorption properties of the plasmonic nanocomposite, NC9, consisting of mixing five core-shell plasmonic groups, AG1@ZnO, AG2@ZnO, G4@ZnO, G5@ZnO and G6@ZnO, where AG1 and AG2 cores represent the plasmonic silver nanospheres of different sizes, while the G4-G6 cores represent the plasmonic gold nanorods, each of the core, being of a certain length and diameter. All these cores are covered by the ZnO thin film shell.

### DETAILED DESCRIPTION

The key motivation of our invention is to overcome the well-known fundamental plasmonic limitation of narrow light absorption band of the plasmonic noble metal (Au, Ag) nanoparticles in different bio-medical and industrial applications. For this purpose, an original plasmonic nanomaterial formulation is disclosed here, where within the same plasmonic nanocomposite (NCi) multiple distinct groups of monodisperse plasmonic noble metal cores @ SMO shell nanocomposites are mixed, each core-shell component group being plasmonically designed to efficiently absorb a certain portion of the sunlight wavelength spectrum. Thus, each component group belonging to the plasmonic nanocomposite (NCi) will contain monodisperse noble metal nanoparticles cores of the same, type, size and shape, each core being *completely* covered with a thin film of semiconducting metal oxide (SMO) of the same thickness and structural state, and which SMO can be one of ZnO, TiO₂, SnO₂, CeO₂ for the exemplary embodiments. The high efficiency of the original core shell plasmonic nanocomposites (NCi) will come not only from the original nanomaterial composition briefly described above, but also from the maximum area of the Schottky junction formed between the noble metal core and the metal oxide shell, which junction is thus fully separating the free carriers like hot electrons and holes, plasmonically generated in the noble metal or excitonically generated in the semiconducting metal oxide, and which carriers are instrumental for the very useful redox reactions involving reactive oxygen species (ROS) formation. Finally, the efficiency of the original plasmonic nanomaterials (NCi) for the described applications is obtained from the solar light harvesting from its entire wavelength spectrum and the synergetic action of the photothermal, photocatalytic effects, to which the cation release effects inside the target medium may be added for the applications related to the antimicrobial coatings.

The following description should be read and understood with reference to the above tables and figures. Although different examples of the chemical design, and of the fabrication methods of the novel plasmonic core-shell nanocomposites will be explicitly describe to prove that these novel nanomaterials are able to show wideband plasmonic absorption from the ultraviolet up to visible and near infrared light spectrum, the people skilled in the art will recognize that the provided examples have many suitable alternatives that may be utilized. Thus, all the types of the original wideband plasmonic nanomaterials, NCi, from below, with the index 1, representing the number of the example, varying from 1 to 12, should be considered as examples, only, as their number can be further increased, by selecting other groups of core-shell components with other shapes and sizes of the noble metal nanoparticle and other types of semiconducting metal oxides of the transition metals (known as "d-block"), as for example, VO₂, Mn₂O₃, Co₃O₄, NiO, Fe₂O₃, MoO₃, and its binary and ternary composites, each of those other types of cores and SMO shells may have other different narrow band absorptions specific to those morphologies and types of SMOs.

In Table 1, a schematic and explicit illustration of the composition, morphologic and optic absorption properties of an exemplary, novel wideband plasmonic nanocomposite, NC1, according to this invention is shown. Specifically, in Figure 1 it is shown the behavior of a wideband plasmonic nanocomposite NC1 (detailed in Figure 2 and Table 1) according to one embodiment of the invention, wherein the multitude of plasmonic core-shell groups consists of substantially equal w% of five groups: G1 to G5:
Group 1 (G1) consists of core-shell nanohybrids having the cores made of Au nanospheres having a size (diameter) of about 10nm and semiconducting metal oxide shells, preferably ZnO, having a thickness of about 10 to 20nm,
Group 2 (G2) consists of core-shell nanohybrids having the cores made of Au nanospheres having a size (diameter) of about 40nm and semiconducting metal oxide shells, preferably ZnO, having a thickness of about 10 to 20nm,
Group 3 (G3) consists of core-shell nanohybrids having the cores made of Au nanospheres having a size (diameter) of about 100nm and semiconducting metal oxide shells, preferably ZnO, having a thickness of about 10 to 20nm,
Group 4 (G4) consists of core-shell nanohybrids having the cores made of Au nanorods having a length of about 60nm and a diameter of about 25 nm, and semiconducting metal oxide shells, preferably ZnO, having a thickness of about 10 to 20nm,
Group 5 (G5) consists of core-shell nanohybrids having the cores made of Au nanorods having a length of about 65nm and a diameter of about 10 nm and semiconducting metal oxide shells, preferably ZnO, having a thickness of about 10 to 20nm.
It can thus be seen in Figure 1 that the absorption band of each of the 5 plasmonic core-shell groups is in partial superposition with the absorption band of at least one of the neigbouring plasmonic core-shell groups, such that a plateau is formed (depicted with the dotted line NC1), so the nanocomposite absorbs light at all wavelengths from NIR (near infra-red), VIZ (visible light) to UV (ultra-violet).
This NC1 consists of mixing five groups of Au core@ZnO thin film shell denoted by Gj@ZnO groups, with index "j", referring to the shape and size of the core, varying from 1 to 5, where each Gj@ZnO core-shell group, consists of monodisperse gold nanoparticle cores of the same size covered by the same ZnO thin film shell. The ZnO film has the thickness equal to 10-20 nm, and it will *completely* cover the Au nanoparticle cores, and this ZnO shell will have the same thickness and structure for all component core-shell groups, Gj@ZnO, of the NC1 nanocomposite. Each of the core-shell groups denoted by G1@ZnO, G2@ZnO and G3@ZnO will contain Au monodisperse nanosphere cores of a specific size, while the core-shell groups G4@ZnO and G5@ ZnO will contain Au nanorods of specific sizes, as shown in Table 1. Commercial Au nanoparticle cores for these Gj@ ZnO core-shell groups may be used, as follows. The first group (G1@ ZnO) will contain Au monodisperse nanosphere cores of diameter equal to 10 nm which will be covered by ZnO thin film shell, and the mass of G1@ZnO group will be (15-25) % w/w from the total mass of the NC1 nanocomposite. This first core-shell group (G1@ZnO) will have enhanced plasmonic light absorption peak in the visible spectrum of 520-540 nm, slightly red-shifted with respect to the pure Au nanosphere of the same size, due to an increased refractive index of ZnO with respect to water for example. The second group (G2@ZnO) will contain Au monodisperse nanosphere cores of diameter equal to 40 nm and ZnO thin film shell, and its mass amount will be (15-25) % w/w from the total mass of the NC1 nanocomposite. This second group (G2@ZnO) will have enhanced plasmonic light absorption peak in the visible spectrum of 550-570 nm, being also slightly red-shifted with respect to the pure Au nanosphere of the same size. The third core-shell group (G3@ZnO) will contain Au monodisperse nanospheres of diameter equal to 100 nm core, and its mass amount will be equal to (15-25) % w/w, from the total mass of the NC1 nanocomposite. This third core-shell group (G3@ZnO) will have an enhanced plasmonic light absorption peak in the visible spectrum equal to 600-630 nm, similarly red-shifted with respect to plasmonic resonance of its corresponding pure Au nanosphere size and shape. The fourth group (G4@ZnO) will contain (commercial) Au monodisperse nanorods with length equal to about 60 nm and diameter of about 25 nm core@ZnO shell, and its amount will be (15-25) %w/w from the total mass of the NC1 nanocomposite. This fourth group (G4@ZnO) contained in the core-shell nanocomposite, NC1, from above, will have an enhanced plasmonic light absorption peak in the near infrared spectrum equal to 800-820 nm, which is similarly red-shifted with respect to plasmonic resonance of its corresponding pure Au nanorod of the same size. The fifth group G5 contained in the core-shell nanocomposite NC1, in an amount of (15-25) %w/w, will consist of nanorods with length of 68 nm and diameter of 10 nm, with maximum (plasmonic) absorption peak in near infrared (NIR) at 1060 nm. Thus, it is obvious that the core-shell nanocomposite NC1, quantitatively described by the relation: mass of NC1=mass of G1@ZnO+ mass of G2@ZnO+mass of G3@ZnO+mass of G4@ZnO+ mass of G5@ZnO. All these plasmonic absorptions of the core-shell groups, Gj@ZnO, which are components of the NC1 nanocomposite will be superposed together to provide the wideband absorption band of NC1 from UV to NIR range, where the UV absorption band (200nm-400 nm) will be due to the excitonic absorption of light by the ZnO film shell, as shown in Fig. 1. Therefore, the core-shell nanocomposite, NC1, from above will be able to efficiently absorb the sunlight from the entire wavelength spectrum, from UV up to VIZ and NIR spectrum. As described in the background of this invention, the resonant plasmonic absorptions in the visible spectrum of the groups G1@ZnO, G2@ZnO and G3@ ZnO, and in the IR spectrum of the groups G4@ZnO and G5@ZnO groups NC1 nanocomposite are due to the non-radiative hot carriers generated in the gold nanospheres of difference sizes by the decaying surface plasmons. Such plasmonic hot carriers (electrons and holes) will be used for the redox reactions producing reactive oxygen species (ROS) to be further applied in the three major applications described in the background (antimicrobial, organic pollutant removal from water and water split reactions for hydrogen production) where synergetic photocatalytic and photothermal effects occurs in the visible light and NIR light. In addition, antimicrobial processes cab be related to the release of the metal cations of the shell under both light and dark conditions. Such enhanced harvesting efficiency in both UV-VIS-NIR light of the plasmonic NC1 nanocomposite will come from the simultaneously occurring effects from above, to which, a complete coverage of the Au nanoparticle with the ZnO shell, providing maximum separation of the hot carriers generated in the Au nanoparticle and excitonic carriers generated in the ZnO, due to the Schottky contact Au@ZnO thus formed. Table 1 and Fig. 1, together, will summarize the composition, and the plasmonic behavior of the above wideband absorption NC1 nanocomposite. From Fig.1, one can very explicitly demonstrate that the broad light absorption band, from UV to VIZ and NIR, of the NC1 nanocomposite is obtained by superposition of the plasmonic absorption bands of all the components core-shell groups, Gj, with index "j" varying from 1 to 5, each of them having a narrow band plasmonic absorption provided by the Au nanoparticles of the same shape and size, to which the UV absorption band provided by the ZnO thin film SMO shell is added. This type of demonstration of the broadband plasmonic absorption for our original composition of the NC1 core-shell nanocomposite, which is disclosed by our invention, here, is further demonstrated by a larger family of noble metals and SMO's by using the same methodology, as explained in detail below, as follows.

In other embodiments, similar wideband plasmonic nanocomposite, NC2, NC3, NC4 and NC5 nanocomposites can be disclosed, where the only difference with respect to NC1 composition is replacing the ZnO SMO thin film shell by TiO₂, *SnO₂* and CeO₂ thin film shells of the same thickness. Therefore, the nanocomposite NC2 will consists of mixing the core-shell groups Gj@TiO₂, NC3 will consists of mixing the core-shell groups Gj@SnO₂ and the nanocomposite NC3 will consists of mixing the core-shell groups Gj@CeO₂, with "j" index varying from 1 to 5. This means that for these novel wideband absorption NC2-NC4 nanocomposites, the same size of the Au nanosphere cores will be used for the three groups G1@SMO-G3@SMO of Au nanosphere@ SMO shell with plasmonic light absorption in the VIZ range and the same size of the Au nanorods cores will be used for the two groups of G4@SMO and G5@SMO of Au nanorods core@ SMO shell with the light absorption in the NIR range, while the SMO types of shell (TiO₂, SnO₂ and CeO₂) with a similar thickness of 10-20 nm will be used. These disclosed NC2-NC5 nanocomposites can be used for the same three major applications, as demonstrated above, with the major advantage of a much higher efficiency, with respect to prior art!

In another embodiment, according to table 2, it is shown another wideband plasmonic nanocomposite according to another embodiment of the invention, wherein the multitude of plasmonic core-shell groups consists of substantially equal w% (20-30%) of four groups: OE1 to OE5:
Group OE1 consists of core-shell nanohybrids having the cores made of Au octahedral nanoparticles having a size of about 20nm and semiconducting metal oxide shells, preferably ZnO, having a thickness of about 10 to 20nm,
Group OE2 consists of core-shell nanohybrids having the cores made of Au octahedral nanoparticles having a size of about 63nm, and semiconducting metal oxide shells, preferably ZnO, having a thickness of about 10 to 20nm,
Group OE3 consists of core-shell nanohybrids having the cores made of Au octahedral nanoparticles having a size of about 125nm, and semiconducting metal oxide shells, preferably ZnO, having a thickness of about 10 to 20nm,
Group OE4 consists of core-shell nanohybrids having the cores made of Au octahedral nanoparticles having a size of about 160nm, and semiconducting metal oxide shells, preferably ZnO, having a thickness of about 10 to 20nm,
This embodiment discloses other novel wideband plasmonic octahedral gold nanocomposites, NCi, (with "I" index varying from 5 to 8) are obtained by mixing four core-shell groups denoted by OEj@SMO, where each OEj group (with "j" index varying from 1 to 4) consists of octahedral gold nanoparticle cores of the same size, which are covered by SMO thin film shells of the same thickness. The NC5-NC8 nanocomposites are able to absorb light from the entire spectrum of solar light, from UV up to VIZ and NIR. Each of the groups, OE1@SMO-OE4@SMO, can be covered by a semiconducting metal oxide shell like ZnO, TiO₂, SnO₂, CeO₂ of thickness equal to 10-20 nm, respectively, as shown below. Following our original methodology from above to create novel wide absorption band plasmonic nanocomposites, below, an example of NC5 nanocomposite formation and its plasmonic absorption properties is shown, summarized also in Table 2, where NC5 is obtained by mixing the above four core-shell groups, OEj@ZnO, covered by thin film of ZnO shell, each group, OEj@ZnO, contributing with about 25 w% to the total mass of NC5 nanocomposite. Within the NC5 composition, the component core-shell group OE1@ZnO consists of monodisperse octahedral gold core, with edge length of 20 nm and absorption peak around 520 nm, covered by ZnO shell, the component core-shell group OE2@ZnO consists of monodisperse octahedral gold core with edge length of 63 nm and plasmonic absorption peak around 620 nm, covered by ZnO shell, the component core-shell group OE3@ZnO consists of monodisperse octahedral gold core with the edge length of 125 nm and plasmonic absorption peak around 650 nm, covered by ZnO shell, and the core-shell group OE4@ZnO consists of monodisperse octahedral gold cores with the edge length of 160 nm and plasmonic absorption peak around 700-800 nm, covered by ZnO shell. Thus, it is obvious that the total mass of NC 5 nanocomposite is: Mass of NC5=mass of OE1@ZnO group + mass of OE2@ZnO group + mass of OE3@ZnO group+ mass of OE4@ZnO group, where the mass of each component group OEj@ZnO (with index j is from 1 to 4) is 20-30% from the mass of the NC5 nanocomposite. These morphology and absorption characteristics of the NC5 nanocomposite are summarized in the Table 2. Similarly, the NC6, NC7 and NC8 nanocomposites will be obtained by preserving the same sizes of the octahedral Au nanoparticles and depositing as thin film shells, the other SMO materials, like TiO₂, SnO₂, and CeO₂. As explained above, for harvesting as much as possible light from the sunlight spectrum, beyond the VIS-NIR light plasmonically absorbed by the NC5-NC8 nanocomposites from above from above, the UV light absorption is performed by the above semiconducting metal oxides, via excitonic generation of free electron-hole pairs, while the visible and NIR light will extract hot carriers (electrons and holes) from the metal, which will be used for the development of the redox reactions specific to the three major applications, described above.

In another embodiment, novel broadband plasmonic nanocomposites, NCi with index "i" varying from 9 to 12, are disclosed. These are obtained by mixing plasmonic core-shell groups like silver nanoparticles@SMO shell *and* core gold nanorods@SMO shell groups in order to plasmonically harvest as much as possible of the sunlight wavelength spectrum from UV up to VIZ and NIR, as it will be shown below. As shown in the background, the synthesis method of monodisperse Ag nanoparticles is well understood and the plasmonic monodisperse Ag nanosphere with the size varying from 5nm to 100 nm size are supplied at commercial level, by Sigma Aldrich owned by Merck, as described above. Depending on the size of the Ag nanoparticles, these commercial Ag nanospheres are able to resonantly (plasmonically) absorb light starting from wavelength peak of 380 nm, (for Ag nanosphere size of 10 nm) up to about 460 nm as a wavelength peak. (for Ag nanosphere size of 80 nm). It is also well known that by using these Ag nanoparticles as cores and covering them with semiconducting metal oxides (SMO) shells, the resonant absorption band of Ag core nanoparticles will be red-shifted due to higher refractive index of the surrounding SMO with respect to water or air. Therefore, different groups of monodisperse Ag core @ SMO shell nanocomposites (each core-shell group containing monodisperse Ag nanosphere cores of the same size) can be originally mixed to cover the portion of the visible light spectrum from about 420 nm to about 520 nm. Under these conditions, for extending the absorption spectrum of the novel nanocomposites, NC9-NC12, to the infrared spectrum, core-shell groups, G4@SMO, G5@SMO, and G6@SMO described above, should be also mixed in these NC9-NC12, similar to the formation of the NC1-NC4 nanocomposites. Having said that, the Table 3 shows the morphologic, compositional and optical absorption properties of the NC9 nanocomposite for harvesting UV-VIZ-NIR light, where for visible light absorption, this NC9 will contain five core-shell groups, as follows. In this embodiment, it is shown a wideband plasmonic nanocomposite wherein the multitude of plasmonic core-shell groups consists of substantially equal w% (15-25%) of five groups:
Group AG1 consists of core-shell nanohybrids having the cores made of Ag nanospheres having a size (diameter) of about 30nm and semiconducting metal oxide shells, preferably ZnO, having a thickness of about 10 to 20nm,
Group AG2 consists of core-shell nanohybrids having the cores made of Au nanospheres having a size (diameter) of about 80nm and semiconducting metal oxide shells, preferably ZnO, having a thickness of about 10 to 20nm,
Group AG4 consists of core-shell nanohybrids having the cores made of Au nanospheres having a length of about 60nm and a diameter of about 25 nm and semiconducting metal oxide shells, preferably ZnO, having a thickness of about 10 to 20nm,
Group AG5 consists of core-shell nanohybrids having the cores made of Au nanorods having a length of about 65nm and a diameter of about 10 nm, and semiconducting metal oxide shells, preferably ZnO, having a thickness of about 10 to 20nm,
Group AG6 consists of core-shell nanohybrids having the cores made of Au nanorods having a length of about 70nm and a diameter of about 25 nm and semiconducting metal oxide shells, preferably ZnO, having a thickness of about 10 to 20nm.
Two core-shell groups are defined as AG1@ZnO and AG2@ZnO and contain silver nanospheres, to which the core-shell group G6@ZnO consisting of gold nanorods cores and ZnO shells are added. These three core-shell groups together will assure together the visible light plasmonic absorption. The other two groups of NC9 are G4@ZnO and G5@ZnO, based on Au nanorods, will be used for NIR absorption, as previously described. More precisely, as described in Table 3, the composition of the wideband nanocomposite NC9 consists of (i) the core-shell AG1@ZnO group containing commercial Ag monodisperse nanospheres with the size of 30 nm covered by ZnO shell, (ii) the core-shell group AG2@ZnO containing commercial Ag nanospheres with the size of 80 nm covered subsequently by ZnO thin film shell, (iii) the core-shell group G6@ZnO, where G6 consists of the commercial gold nanorods of length equal to 70 nm and diameter equal to 25 nm, with plasmonic absorption peak at 650 nm (iv) the core-shell group G4@ZnO containing commercial Au nanorods with length of 60 nm and diameter of 25 nm, and (v) the core-shell group G5@ZnO containing commercial Au nanorods with length of 65 nm and diameter of 10 nm. In this case, each component core-shell group of NC9 nanocomposite will have a mass concentration of 15-25% from the total mass of the NC9. It becomes obvious, that the nanocomposites NC10, NC11 and NC12 can be obtained as above, where the ZnO shell is replaced, by TiO₂, SnO₂ and CeO₂ shells, respectively. The UV absorption band for all these NC9-NC12 nanomaterials is provided by the ZnO shell as explained above.

In another embodiment, a method for the preparation of the wideband nanocomposites, like NC1-NC4 from above is disclosed. As a detailed example, in Fig. 2, the schematics of the technologic process flow for the synthesis of NC1 nanocomposite consisting of mixing the five core-shell groups G1@ZnO-G5@ZnO is shown. As described above, each of the three groups, G1@ZnO-G3@ZnO contains Au nanospheres of a certain size, and each of the groups G4@ZnO and G5@ZnO contains Au nanorods of a certain size, as illustrated in Table 1. All together the five core shell groups will plasmonically absorb light from the entire spectrum of sunlight (UV-VIZ-NIR). The process map for NC synthesis from Fig. 2 consists of three major stages. In the first stage, the selection of the commercial Au nanoparticle suspensions (solid nanoparticles floating in liquid solution), G1s-G5s, takes place, by considering the plasmonic absorption, as a criterion. As an example, in the first step, one can select 1.5 mL of each of the G1s-G5s types of Au nanoparticles suspensions with optical density (OD) 1, stabilized in citrate buffer or Cetyltrimethylammonium bromide (CTAB), as described by Sigma Aldrich own by Merc, as follows:
G1s suspension with OD 1, stabilized in citrate buffer and containing monodisperse Au nanospheres, G1, of 10 nm diameter.
G2s suspension with OD 1, stabilized in citrate buffer and containing monodisperse Au nanospheres, G2, of 40 nm diameter.
G3s suspension with OD 1, stabilized in citrate buffer and containing monodisperse Au nanospheres, G3, of 100 nm diameter.
G4s suspension stabilized in CTAB and containing monodisperse Au nanoribons G4, with Length=60 nm, and Diameter=25 nm.
G5s suspension stabilized in CTAB and containing monodisperse Au nanoribons, G5, with Length=65 nm, and Diameter=10 nm.
G6s suspension stabilized in CTAB and containing monodisperse Au nanoribons, G6, with Length=70 nm and Diameter=25 nm.

As described in Fig. 2, in the second stage, the ZnO thin film shell has to be deposited separately on each of the above five G1-G5 groups of Au nanoparticle cores. To keep the NC1 synthesis process under control, each core-shell group, Gj@ZnO, will be prepared separately, in the second step, and then, these Gj@ZnO will be mixed together, as shown in the step III from Fig. 2. The methodology for the ZnO shell deposition on each of the Gj types of Au nanoparticles will be that described in the reference (Shin-Bei Tsai, Jui-Yuan Chen, Chih-Yang Huang, Szu-Yu Hou, and Wen-Wei Wu, *"Observing*

*Growth and Crystallization of Au@ZnO Core-Shell Nanoparticles by In Situ Liquid Cell Transmission Electron Microscopy: Implications for Photocatalysis and Gas-Sensing Applications",* ACS Appl. Nano Mater. 2021, 4, 612-620), as follows. Let consider the preparation of the core shell group, G1@ ZnO, as an example. Firstly, a well-mixed solution consisting of 6 mM hexadecyl trimethylammonium bromide (CTAB), and 3 mM ascorbic acid (AA), and 30 mL of water is prepared, by stirring for 15 minutes. Then, 6 mM of zinc nitrate, Zn(NO₃)₂·6H₂O, and 6 mM of hexamethylenetetramine (HMTA) are added to the above CTAB-AA solution and thoroughly mixed, for 15 minutes. Then, the amount of 1.5 mL of G1s suspension containing the G1 Au nanospheres from Sigma Aldrich is added and stirred for several minutes. After that, the mixed solution is heated at 85 °C for about 4 h in an oven and then centrifuged and washed with ethanol three times. The obtained core-shell G1@ZnO nanoparticles making together the core-shell group G1@ZnO are collected and dried in an oven followed by their calcination at 500°C. The final, calcinated, G1@ZnO powder is then collected and weighted. The same procedure will follow for the other core-shell groups, Gj@ZnO.

As shown in Fig. 2, in the third step, for the preparation of the original wideband plasmonic nanomaterial, NC1, the core-shell groups G1@ZnO, G2@ZnO, G3@ZnO, G4@ZnO and G5@ZnO are mixed, so that each Gj@ZnO group to contribute with about similar mass concentration to the total mass of NC1.

In a similar way, a novel NC2 nanomaterial, obtained by mixing five core-shell plasmonic groups, Gj@TiO₂, is disclosed, starting from the same types of Au nanoparticles, Gj, described. For the original preparation of NC2, the same generic three-step method used above for NC1 synthesis will be used. In the first step, the five types, G1s-G5s of Au nanoparticle suspensions are selected. You have had an example above about such a selection. To keep the NC2 synthesis process under control, each core-shell group, Gj@TiO₂, will be prepared separately, in the second step, and then, these Gj@TiO₂ will be mixed together, as shown in the step III from Fig. 2. The methodology for the TiO₂ shell deposition on each of the Gj types of Au nanoparticles cores may be similar to that shown in this reference (Tian-Ming Chen, Ge-Yang Xu, He Ren, Hua Zhang, Zhong-Qun Tian, and Jian-Feng Li, "Synthesis of Au@TiO2 core-shell nanoparticles with tunable structures for plasmon-enhanced photocatalysis", Nanoscale Adv., 2019, 1, pp. 4522-4528). An example of the preparation of the core-shell group G1@TiO₂ is shown below. In step 1, an amount of 1.5 mL of G1s suspension stabilized in CTAB is dispersed in 1.5 mL of water. The resultant suspension is added dropwise to an aqueous solution of sodium dodecyl sulfate (SDS) (1.5 mL, 0.1 M) and then it is vigorously stirred for 30 minutes, by centrifugation, at room temperature. The excess of SDS is removed by centrifugation. This process has replaced the initial CTAB-encapsulated Au nanosphere (positively charged surface of gold), G1, by SDS-encapsulated, G1 nanospheres (negatively charged surface of gold). These SDS-encapsulated G1 nanospheres are redispersed in water (8.3 µL), for obtaining a concentrated suspension of SDS functionalized Au nanospheres, G1. Separately, 8.3 µL of TiCl₃ solution is mixed with 1 mL of aqueous solution of 0.1 M of NaHCO₃. Finally, the concentrated suspension of SDS functionalized Au nanospheres, G1 is mixed with TiCl₃-NaHCO₃ reducing agent, stirred for about 10 minutes and washed three times to obtain the core-shell group G1@TiO₂. More specifically, the hydrolysis of TiCl₃ creates the TiOH²⁺ cations which are adsorbed by the negatively charged SDS layer on the surface of Au core, G1, and finally, the dissolved oxygen atoms from solution oxidize the Ti⁴⁺ species to the TiO₂ shell at room temperature. In a similar approach, the G2@TiO₂, G3@TiO₂, G4@TiO₂ and G5@TiO₂ core-shell groups can be synthetized. Finally, by mixing the G1@TiO₂-G5@TiO₂ groups, in the required mass proportions, the wideband plasmonic NC2 nanocomposite is used.

In a similar way, the original wideband plasmonic NC3 nanocomposite, consisting of mixing the core-shell groups, Gj@SnO₂, is disclosed here, following the process flow generically described in Fig. 2, and where as semiconducting metal oxide shell, the SnO₂ thin film is prepared. Without repeating the above methodology, here only the second step, specific to the deposition of the SnO₂ film shell on the G1, gold nanospheres cores is exemplified. As an example, the SnO₂ deposition method on the Au nanospheres, G1, can be made as described in the following paper (Xiaoqi Fu, Guangfang Grace Li, Esteban Villarreal and Hui Wang, Hot Carriers in Action: Multimodal Photocatalysis on Au@SnO2 Core-Shell Nanoparticles, Nanoscale, 2019,11, 7324-7334). For example, 1.5 mL of G1s suspension is further diluted with an additional 6 ml of deionized water and then about 0.1. M NaOH is added to adjust the pH of the colloidal solution to the value of 10. After this operation, the colloidal solution of gold nanoparticles is heated at 80°C, and then the amount of 100 µl of Na₂SnO₃ precursor of tin atoms is quickly added under stirring, followed by continuous stirring for about 2 hours. At the end of this process, core-shell group G1@SnO₂ is obtained. In a similar way, the other Gj@SnO₂ groups are formed starting from the corresponding gold suspensions described above, which are then exposed then one by one to the SnO₂ film deposition. Finally, the novel NC3 nanocomposite is obtained by mixing the core-shell groups, Gj@SnO₂, each of them being in the mass concentration as required by the designed value of NC3.

Finally, an example of the original wideband nanocomposite, NC4, consisting of mixing the core-shell groups, Gj@CeO₂ is disclosed here, following the same process flow described above for the other types of core-shell groups of Gj@SMO. In the case of NC4 synthesis, the only difference with respect to above routes is the deposition of the CeO₂ thin film as a shell on the plasmonic gold nanoparticles, Gj, described above. A numerical example of a chemical route for the CeO₂ thin film deposition (shell) from liquid state on the plasmonic G1, gold nanospheres cores is shown here, as also described in this reference (Dung Van Dao et al., *"Insightful understanding of hot-carrier generation and transfer in plasmonic Au@CeO₂ core-shell photocatalysts for light-driven hydrogen evolution improvement",*

Applied Catalysis B: Environmental 286 (2021) 119947). Thus, an amount of 1. 5mL of G1s suspension is added to the 1.5 mL of deionized water and ultrasonically stirred for 15 minutes. Then, 1 mM of Na₂CO₃ reducing agent, and 1mM of Ce(NO₃)₃ are added slowly, and this process is then continued by a refluxing of the colloidal suspension at the temperature of 90°C for 12 hours. At the end of the refluxing, the colloidal suspension is centrifuged for 30 minutes, for the core-shell G1@CeO₂ nanoparticle separation. The separated core-shell group G1@CeO₂ was washed three times in ethanol and then it was dried overnight at 90°C, and calcinated, in air, for 2 hours at 500°C for crystallization of the CeO₂ thin film shell. The other core-shell groups Gj@CeO₂ groups are prepared in a similar way, and then, for preparing the novel NC4 nanocomposite, these groups are mixed together, similar to the methodology described in Fig. 2 for the core-shell Gj@ZnO groups.

In another embodiment, the same original method from above is applied for the synthesis of the wideband plasmonic nanocomposites, NC5-NC8, starting this time, in the first step, from different groups of gold octahedral nanoparticles cores (OE1-4) of different sizes, which have different plasmonic absorption peaks (from visible to near-infrared spectrum), and which were described in the prior art of this invention, as shown in Table 2. The second step consists in the deposition of the SMO thin film shell (ZnO, TiO₂, SnO₂, CeO₂) on each of the OE1-OE4 core groups, by following the synthesis processes described above for the NC1-4 nanocomposites.
In the third step, the mixing process of the core-shell groups, OE1@ZnO, OE2@ZnO, OE3@ZnO and OE4@ZnO in the selected mass fractions will provide the NC5 nanocomposite. In a similar way, by following the same approach and replacing the ZnO, by TiO₂, SnO₂ and CeO₂ deposition process and mixing the corresponding core-shell groups, the wideband nanocomposite NC6, NC7 and NC 8 respectively are obtained, and thus disclosed.

In another embodiment, the same original method from the above is applied for the synthesis of the wideband plasmonic nanocomposites NC9-NC12, by mixing different core-shell groups. In this case, each nanocomposite, NC9-NC12 consists of five core-shell groups, as follows AG1@SMO, AG2@SMO, G4@SMO, G5@SMO, G6@SMO, with the definition of the noble metal nanoparticles cores and the SMO shells from the previous paragraphs. In the first step, the silver nanoparticles of different size are produced as described in the background section, or are supplied by a commercial company, like Sigma Aldrich owned by Merck. For example, for the fabrication of the wideband plasmonic nanocomposite NC9, different core-shell groups of AG1@ZnO, AG2@ZnO, G4@ZnO, G5@ZnO and G6@ZnO are fabricated in the second fabrication step by using the same procedure used for depositing ZnO thin film shell for the wideband NC1 nanocomposite. Finally, in the third step, the mixing process of the above corer-shell group components with the desired mass fraction of each of them it is performed.

It was demonstrated in the background description of this invention that ZnO and other types of metal oxide nanoparticles were already well integrated in the composition of the stable 'hygienic acrylic latexes" as functional additives with good antimicrobial activity in both liquid state and in the subsequent ZnO functionalized latex coatings to be applied on the room walls. The present invention makes an important step forward into an enhanced increase of the antimicrobial activity of the paint coatings by replacing the bactericidal nanoparticles of semiconducting metal oxides which are photocatalytic active only in the ultraviolet light, with the novel wideband core-shell plasmonic nanocomposites disclosed above, which are active in the entire light spectrum of the sunlight, due to the noble metal nanoparticle cores. The novel core-shell wideband nanocomposite is compatible with the existing acrylic paint formulations, as it has shall made of semiconducting metal oxide, and the outer metal atoms of the shell can make chemical bonds with the acrylic binders, preserving the chemical stability of the existing latexes formulations functionalized with metal oxide nanoparticles. The major advantage of the novel core-shell NCi-functionalized acrylic latex emulsions and its associated solid coatings is the synergetic and enhanced photocatalytic and photothermal activity related to the presence of noble metal cores. Under these circumstances, for an efficient sterilization process, here it is disclosed an enhanced "clean and dry" sterilization process based on illumination of the walls containing the antimicrobial painting disclosed above, with sunlight and also with a fix or even a portable illumination source of higher intensity which can trigger not only the wideband plasmonic photocatalytic effect but also a local heating of the surface of the wall by the plasmonic photothermal effect of the core-shell nanocomposite as described in the background of this invention. Such a "wall scanning" with a light beam from short distance can further increase the temperature of wall surface and further contribute to the local temperature increase above supportability level of pathogens.

For those skilled in the art, it is obvious and easy to further design other wideband plasmonic nanocomposites by mixing other core-shell groups, where each such group to contain gold or silver nanoparticles with a certain shape and size which may have another narrowband plasmonic absorptions, which are further covered with any type of semiconducting metal oxide shell, without departing from the present invention.

## Claims

1. A wideband plasmonic nanocomposite with enhanced light absorption in the ultraviolet-visible-near infrared spectrum and enhanced photocatalytic and photothermal behavior, wherein said wideband plasmonic nanocomposite consists of a multitude of plasmonic core-shell groups, wherein
- each plasmonic core-shell group consists of core-shell nanohybrids,
wherein all the core-shell nanohybrids of each group are made of:
- cores of plasmonic noble metal nanoparticles of the same type, shape and size, which are completely covered by
- shells made of films of semiconducting metal oxide of the same type and thickness,
and
- each of said plasmonic core-shell groups is configured to efficiently absorb a different band of the light wavelength spectrum than the other plasmonic core-shell groups.

2. Wideband plasmonic nanocomposite according to claim 1, wherein said multitude of plasmonic core-shell groups comprises at least two, at least three, at least four groups, preferably 4, 5 or 6 plasmonic core-shell groups.

3. Wideband plasmonic nanocomposite according to any preceding claim, wherein the type of said noble metal nanoparticle core is Au (gold) or Ag (silver).

4. Wideband plasmonic nanocomposite according to any preceding claim, wherein said plasmonic nanoparticle cores are in the shape of gold nanospheres, gold nanorods, gold octahedral nanoparticles or monodisperse silver nanospheres.

5. Wideband plasmonic nanocomposite according to any preceding claim, wherein the type of said semiconducting metal oxide films is chosen from the group consisting of: ZnO, TiO₂, SnO₂, CeO₂, or any of the semiconducting metal oxides.

6. Wideband plasmonic nanocomposite according to any preceding claim, wherein the thickness of said semiconducting metal oxide film shell is of about 5 to 30 nm, preferably of about 10 to 20 nm.

7. Wideband plasmonic nanocomposite according to any preceding claim, wherein the type, shape and size of the noble metal cores and the type and thickness of the semiconducting metal oxide shells are configured such that each of said plasmonic core-shell groups absorbs in a narrow band of the light wavelength spectrum that is less than 300 nm-wide, such as about 200 nm-wide, about 150 nm wide, or about 100 nm-wide.

8. Wideband plasmonic nanocomposite according to any preceding claim, wherein the type, shape and size of the noble metal cores and the type and thickness of the semiconducting metal oxide shells are configured such that the absorption band of each of said multitude of plasmonic core-shell groups is in partial superposition with the absorption band of at least one of the other plasmonic core-shell groups.

9. Wideband plasmonic nanocomposite according to any preceding claim, wherein the type, shape and size of the noble metal cores and the type and thickness of the semiconducting metal oxide shells are configured such that, together, the multitude of plasmonic core-shell groups absorbs at all wavelengths from NIR (near infra-red), VIZ (visible light) to UV (ultraviolet).

10. A method for the fabrication of a wideband plasmonic core-shell nanocomposite with enhanced light absorption in the ultraviolet-visible-near infrared spectrum, enhanced photocatalytic *and* photothermal behavior, said method comprising the steps:
a) providing at least two, at least three, preferably 4, 5 or 6 groups of noble metal nanoparticle cores of gold (Au) or silver (Ag), wherein the type and/or shape and/or size of the noble metal nanoparticle cores is the same in each core group, and is different from any other group;
- b) depositing on each of the cores of step a) the same type of a semiconducting metal oxide film shell, in liquid phase, in a thickness of about 5 to 30nm, preferably about 10 to 20nm, wherein said type of semiconducting metal oxide is chosen from: ZnO, TiO₂, SnO₂, CeO₂, or any of the semiconducting metal oxides; to obtain core-shell groups, each core-shell group having noble metal nanoparticle cores that are different from the other core-shell groups, and all the core-shell groups having the same semiconducting metal oxide shell, and
c) mixing and calcinating at about 400 to 500°C the core-shell groups obtained in step b).

11. The fabrication method according to claim 10, wherein each core group in step a) contains nanoparticles that are either:
- gold nanospheres of the same size, or
- gold nanoribons of the same size, or
- silver nanospheres of the same size, or
- gold octahedra of the same size,
and wherein the sizes of the nanoparticles in each group of cores is different from the size in the other groups of cores.

12. An improved antimicrobial latex paint coating with enhanced plasmonic photocatalytic and photothermal efficiency in the ultraviolet-visible-near infrared light spectrum, containing at least one of the wideband plasmonic nanocomposites according to any of the claims 1 to 10, together with an acrylic latex paint emulsion.

13. A method of efficient optical sterilization of walls **characterized by** covering said walls with the paint coating described in the preceding claim, and exposing those walls to sunlight and/or a broad-spectrum illumination source, from ultraviolet to visible and near infrared.

14. An improved photocatalytic and photothermal material for organic pollutant removal from water, containing at least one of the wideband plasmonic nanocomposites according to any of the claims 1 to 10, which has an enhanced plasmonic photocatalytic and photothermal efficiency, in the whole light spectrum from ultraviolet to visible and near infrared.

15. An improved photocatalytic and photothermal material for hydrogen generation by water splitting reactions, containing at least one of the wideband plasmonic nanocomposites according to any of the claims 1 to 10, which has an enhanced plasmonic photocatalytic and photothermal efficiency, in the whole light spectrum from ultraviolet to visible and near infrared.

## Amended claims

### Amended claims in accordance with Rule 137(2) EPC.

1. A method for the fabrication of a wideband plasmonic core-shell nanocomposite with enhanced light absorption in the ultraviolet-visible-near infrared spectrum, enhanced photocatalytic *and* photothermal behavior, said method comprising the steps:
a) providing at least two, at least three, preferably 4, 5 or 6 groups of noble metal nanoparticle cores of gold (Au) or silver (Ag), wherein the type and/or shape and/or size of the noble metal nanoparticle cores is the same in each core group, and is different from any other group;
- b) depositing on each of the cores of step a) the same type of a semiconducting metal oxide film shell, in liquid phase, in a thickness of 5 to 30nm, preferably 10 to 20nm, wherein said type of semiconducting metal oxide is chosen from: ZnO, TiO₂, SnO₂, CeO₂; to obtain core-shell groups, each core-shell group having noble metal nanoparticle cores that are different from the other core-shell groups, and all the core-shell groups having the same semiconducting metal oxide shell, and
c) mixing and calcinating at 400 to 500°C the core-shell groups obtained in step b).

2. The fabrication method according to claim 1, wherein each core group in step a) contains nanoparticles that are either:
- gold nanospheres of the same size, or
- gold nanoribons of the same size, or
- silver nanospheres of the same size, or
- gold octahedra of the same size,
and wherein the sizes of the nanoparticles in each group of cores is different from the size in the other groups of cores.

3. An improved antimicrobial latex paint coating with enhanced plasmonic photocatalytic and photothermal efficiency in the ultraviolet-visible-near infrared light spectrum, containing at least one of the wideband plasmonic nanocomposites fabricated by a method according to any of the claims 1 to 2, together with an acrylic latex paint emulsion.

4. A method of efficient optical sterilization of walls **characterized by** covering said walls with the paint coating described in the preceding claim, and exposing those walls to sunlight and/or a broad-spectrum illumination source, from ultraviolet to visible and near infrared.

5. An improved photocatalytic and photothermal material for organic pollutant removal from water, containing at least one of the wideband plasmonic nanocomposites fabricated by a method according to any of the claims 1 to 2, which has an enhanced plasmonic photocatalytic and photothermal efficiency, in the whole light spectrum from ultraviolet to visible and near infrared.
